# EUROPÄISCHE PATENTSCHRIFT

(11) **EP 2 167 360 B1**
(45) Veröffentlichungstag und Bekanntmachung des Hinweises auf die Patenterteilung: **25.05.2016**
(21) Anmeldenummer: 08773869.6
(22) Anmeldetag: 04.07.2008
(51) Int. Cl.: B60T 17/02

(54) **STEUEREINRICHTUNG FÜR EIN DRUCKLUFTSYSTEM EINES FAHRZEUGS**
CONTROL DEVICE FOR A COMPRESSED AIR SYSTEM OF A VEHICLE
DISPOSITIF DE COMMANDE D'UN SYSTÈME PNEUMATIQUE DE VÉHICULE

(30) Priorität: 16.07.2007 DE 102007032970
(43) Veröffentlichungstag der Anmeldung: 31.03.2010
(73) Patentinhaber: KNORR-BREMSE Systeme für Nutzfahrzeuge GmbH, 80809 München (DE)
(72) Erfinder: LEINUNG, Andreas, 81377 München (DE)
(74) Vertreter: Mattusch, Gundula
(86) Internationale Anmeldenummer: PCT/EP2008/005475
(87) Internationale Veröffentlichungsnummer: WO 2009/010198

(56) Entgegenhaltungen:
- WO-A-98/07588
- WO-A-2006/071170
- DE-A1- 19 714 513

## Beschreibung

Die Erfindung betrifft das Gebiet der Herstellung und der Betriebsweise von Fahrzeugen und Fahrzeugkomponenten. Insbesondere betrifft die Erfindung erdgebundene Fahrzeuge des täglichen Straßenverkehrs, insbesondere Kraftfahrzeuge wie beispielsweise Nutzfahrzeuge. Die Erfindung betrifft insbesondere eine Steuereinrichtung für ein Druckluftsystem eines Fahrzeugs.

Fahrzeuge des täglichen Straßenverkehrs fahren je nach momentaner Geschwindigkeit, Fahrzeugbeschleunigung (positiv oder auch negativ, etwa bei einer Abbremsung) oder anderen äußeren Einflüssen wie fahrerseitigen Eingriffen häufig vorübergehend im Schubbetrieb.

Der Schubbetrieb meint hier den Schleppbetrieb des Motors durch die über den geschlossenen Antriebsstrang eingespeiste kinetische Energie des Fahrzeug. Das Fahrzeug, das im Zeitpunkt des Schubbetriebs über mehr kinetische Energie verfügt, als der Motor augenblicklich bereitstellt, schleppt den Motor d.h. will ihn beschleunigen.

In der Ebene ist ein so verstandener Schubbetrieb nur dann möglich, wenn der Fahrer durch Zurücknahme der Gaspedal-Stellung das Fahrzeug abbremst. Dieser Schubbetrieb kann im Gefälle je nach dessen Grad und nach der Fahrerreaktion am Gaspedal längere Zeit sowohl mit positiver und negativer Fahrzeugbeschleunigung als auch mit konstanter Fahrgeschwindigkeit auftreten.

Schubbetriebsphasen machen lediglich einen kleineren Anteil der gesamten Fahrzeit aus. Insbesondere ist bislang nicht vorhersehbar, wann im Fahrzeug ein Schubbetrieb auftreten wird, da das Verhalten des Fahrers hierauf wesentlichen Einfluß hat. Das Fahrverhalten des Fahrers ist jedoch nicht vorhersehbar, weshalb herkömmlich keine Möglichkeit besteht, etwaige Schubbetriebsphasen vorherzusehen, bevor sie tatsächlich eintreten. Die Ungewißheit hinsichtlich des zukünftigen bzw. bevorstehenden Fahrverhaltens des Fahrers und damit seines Fahrzeugs verhindert es, auftretende Schubbetriebsphasen noch effizienter technisch auszunutzen. Lediglich bei einer bereits eingetretenen Schubbetriebsphase, die noch andauert, können Fahrzeugkomponenten in veränderter Weise gesteuert werden. Jedoch auch hier besteht herkömmlich Ungewißheit über die Zeitdauer, während derer eine bereits eingetretene Schubbetriebsphase noch andauern wird, da neben der Fahrerreaktion auch die zukünftigen teils streckenbedingten Betriebszustände des Fahrzeugs unbekannt sind. Dies begrenzt die Möglichkeiten einer optimierten Steuerung von Fahrzeugkomponenten. Aufgrund der vielen nicht vorhersagbaren Einflüsse besteht noch nicht die Möglichkeit, die oben genannten Beschränkungen bei der Steuerung und des Betriebsweise von Fahrzeugkomponenten zu überwinden.

Insbesondere Druckluftsysteme, wie sie etwa für eine Bremsanlage erforderlich sind, können herkömmlich nur mit den obigen Einschränkungen gesteuert werden.

Dokument WO 2006/07117 A1 offenbart ein Druckluftsystem, das GPS-Daten verwendet, um den Druckluftverbrauch auf einem voraus liegenden Streckenabschnitt zu prognostizieren.

Es ist die Aufgabe der vorliegenden Erfindung, das Vorauserkennen von Schubbetriebsphasen in Fahrzeugen, insbesondere erdgebundenen Fahrzeugen wie beispielsweise Straßenfahrzeugen, für die Steuerung eines Druckluftsystems, etwa für ein Bremssystem, zu nutzen. Es soll insbesondere eine hierzu geeignete Vorrichtung bereitgestellt werden.

Diese Aufgabe wird durch eine Vorrichtung gemäß Anspruch 1 gelöst. Bevorzugte Ausführungsformen sind insbesondere in den Unteransprüchen aufgeführt und beansprucht.

Die vorliegende Erfindung ermöglicht es, erstmals die kartographischen Höhenpositionen einer Fahrtstrecke, d.h. deren lokale Höhenkoordinaten (in Richtung senkrecht zur Erdoberfläche) technisch zur Voraussage des Eintretens von Schubbetriebsphasen eines beweglichen Fahrzeugs und damit für die Steuerung eines Druckluftsystems, etwa für ein Bremssystem auszunutzen. Bislang werden in beweglichen Fahrzeugen Navigationssysteme lediglich dazu eingesetzt, dem Fahrer eine Orientierung im zweidimensionalen Straßennetz zu geben und zur Routenplanung eine kürzeste oder schellste Fahrtroute zu errechnen. Hierfür spielen Höhenkoordinaten keine Rolle, da das Fahrzeug an die jeweilige Straße gebunden ist und ihrem Höhenverlauf zwangsläufig folgen muß; lediglich die horizontalen Koordinaten parallel zur Erdoberfläche (in positive und negative y/x-Richtung bzw. in Nord/Süd/Ost/West-Richtung) sind für die momentane Position des Fahrzeugs im Straßennetz und für die daraus resultierende kürzeste Fahrtroute (deren Verlauf dementsprechend auch nur durch zweidimensional dargestellt wird) von Bedeutung. Herkömmlich erfolgt auch keine technische Ausnutzung von Höhenkoordinaten zur Steuerung einer Komponente eines Fahrzeugs, sondern ausschließlich zur Wegfindung zu einem Zielort.

Die Erfindung ermöglicht hingegen erstmals eine Optimierung des Betriebsablaufs bzw. der Steuerungsvorgänge des Fahrzeugs, insbesondere einer Komponente des Fahrzeugs wie etwa eines Druckluftsystems, insbesondere Bremssystems, in Abhängigkeit von Gefällestrecken einer dem Fahrzeug vorausliegenden Fahrtstrecke. Herkömmlich werden nur die Parameter des Fahrzeugs selbst, die die jeweiligen Betriebszustände der Fahrzeugkomponenten angeben, als Einflußgrößen zu deren Steuerung und Optimierung herangezogen, nicht jedoch die kartographischen Daten einer befahrbaren Fahrtstrecke. Die Erfindung ermöglicht die Einbeziehung vertikaler Positionskoordinaten der Fahrtstrecke und/oder des Fahrzeugs, um das zukünftige Fahrverhalten des Fahrzeugs vorauszuberechnen und insbesondere eine Prognose über voraussichtlich auftretende Schubbetriebsphasen zu berechnen. Auf deren Grundlage kann die Steuerung einer oder mehrerer Fahrzeugkomponenten verbessert werden. So läßt sich etwa im voraus erkennen, ob und wann eine länger andauernde Schubbetriebsphase bevorsteht, während derer ein Steuervorgang, Schaltvorgang oder sonstiger Arbeitsschritt einer Fahrzeugkomponente ohne Energieverbrauch oder mit geringerem Energieverbrauch durchgeführt werden kann. Während herkömmlich das bevorstehende Fahrverhalten des Fahrers als unvorhersehbar hingenommen wird, ermöglicht die vorliegende Erfindung einen qualitativen Technologiesprung hinsichtlich der Steuerung und Betriebsweise von Fahrzeugkomponenten unter Berücksichtigung von Einflußgrößen, die außerhalb des Fahrzeugs selbst liegen. Hiervon können beliebige Fahrzeugkomponenten profitieren, insbesondere Komponenten von straßengebundenen Fahrzeugen, etwa von Nutzfahrzeugen.

Insbesondere wird ein Vorauserkennen von Schubbetrieben bzw. Schubbetriebsphasen möglich sowie deren technische Ausnutzung im Fahrzeug. Insbesondere solche Phasen, in denen der Fahrzeugmotor des fahrenden Fahrzeugs über seine Verbindung mit den Fahrzeugrädern ein zusätzliches Drehmoment erhält, das auf eine Erhöhung der Motordrehzahl hinwirkt, lassen sich zur energiesparenden oder e-nergiefreien Durchführung eines Steuervorgangs, Schaltvorgangs oder sonstigen Arbeitsschrittes einer beliebigen Fahrzeugkomponente ausnutzen.

Die Erfindung wird nachstehend mit Bezug auf die Figuren beschrieben. Es zeigen:
Figur 1 eine schematische Darstellung eines Fahrzeugs mit der erfindungsgemäßen Vorrichtung,
Figur 2 eine schematische Darstellung einer möglichen Ausführungsform der erfindungsgemäßen Vorrichtung,
Figur 3 die Steuerung einer beliebigen Fahrzeugkomponente des Fahrzeugs mithilfe der erfindungsgemäßen Vorrichtung,
die Figuren 4A bis 4C mehrere Ausführungsarten hinsichtlich der zeitlichen Vorausberechnung von Schubbetriebsphasen und
Figur 5 eine schmatische Darstellung von Komponenten eines Fahrzeugs mit der erfingsgemäßen Vorrichtung gemäß einer möglichen Ausführungsform und
Figur 6 eine mögliche Ausführungsform einer erfindungsgemäß gesteuerten Fahrzeugkomponente, insbesondere eines Druckluftsystems oder Bremssystems,
Figur 7 eine schematische Darstellung einer erfindungsgemäßen Vorrichtung zur Ermittlung eines Schubbetriebs eines Fahrzeugs, die zur Durchführung des erfindungsgemäßen Verfahrens geeignet ist;
Figur 8 ein Flussdiagramm eines erfindungsgemäßen Verfahrens zur Ermittlung eines voraussichtlich auftretenden Schubbetriebs in Zusammenhang mit einer Luftaufbereitungsanlage gemäß einem ersten Ausführungsbeispiel der Erfindung; und
Figur 9 ein Flussdiagramm des erfindungsgemäßen Verfahrens zur Ermittlung eines voraussichtlich auftretenden Schubbetriebs im Zusammenhang mit der Luftaufbereitungsanlage gemäß einem zweiten Ausführungsbeispiel der Erfindung.

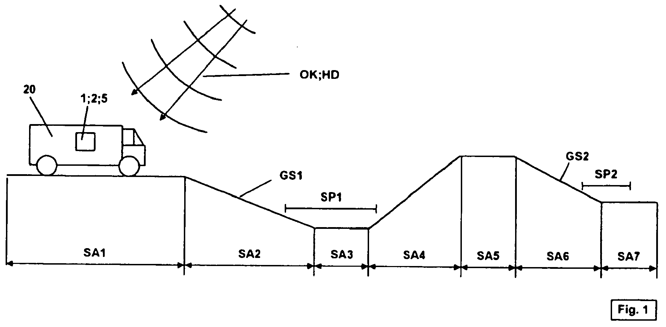

Figur 1 zeigt schematisch ein mit der erfindungsgemäßen Vorrichtung 1 ausgestattetes Fahrzeug 20 auf einer Fahrtstrecke F. Die Vorrichtung 1 ist so beschaffen, daß sie Höhenpositionsdaten HD und vorzugsweise auch momentane Ortskoordinaten OK; x, y, L des fahrenden Fahrzeugs empfangen und zu einer Prognose über das Auftreten und/oder die zeitliche Dauer von Schubbetriebsphasen in der Zukunft verarbeiten kann. Herkömmlich werden allenfalls die geographischen Ortskoordinaten OK, die die momentane Position x; y des Fahrzeugs angeben, zur Orientierung im Strapenverkehr ausgewertet, zumal das Fahrzeug zwangsläufig dem Höhenverlauf des Straße folgen muß und sich somit aus den Höhenpositionsdaten keine Einflußmöglichkeiten für die auswählbaren Fahrtrouten des Straßennetzes ergeben.

Erfindungsgemäß jedoch werden vor allem die Höhenpositionsdaten zu einer Prognose für herkömmlich noch nicht vorauserkennbare Schubbetriebsphasen verarbeitet. Figur 1 zeigt schematisch einige Gefällestrecken GS1, GS2 der Fahrtstrecke, die dem Fahrzeug vorausliegen. Erfindungsgemäß erfolgt eine Berechnung einer Prognose zukünftige und/oder momentaner, noch andauernder Schubbetriebsphasen. Diese werden in der Regel räumlich und zeitlich nur teilweise mit den Gefällestrecken zusammenfallen, da meist noch weitere Fahrzeugparameter, bzw. deren momentane Werte während der Fahrt Einfluß haben auf die Betriebszustände des Fahrzeugs und seiner Fahrzeugkomponenten.

In Figur 1 ist die Fahrtstrecke vereinfachent in mehrere Streckenabschnitte SAn unterteilt. Ferner sind in Figur 1 beispielhaft zwei zukünftige Schubbetriebsphasen SP1, SP2 dargestellt, wobei die erste Schubbetriebsphase SP1 sich räumlich sogar mit einem Streckenabschnitt SA 4, der in Fahrtrichtung eine Steigung, die einem Schubbetrieb eher entgegenwirkt, überlappt. Die erste Schubbetriebsphase überlappt zugleich mit Streckenabschnitten, die in Fahrtrichtung mit einer Steigung (für SA4), einer Gefällestrecke (für SA2) und mit einem horizontalen Streckenverlauf ohne Gefälle oder Höhenanstieg (für SA3) zusammenfallen. Somit setzt die von der erfindugnsgemäßen Vorrichtung errechnete Prognose in der Regel die Gefällestreckne nicht lediglich den Schubbetriebsphasen gleich, sondern berücksichtigt bei der Berechnung und Vorhersage der Schubbetriebsphasen eine komplexere Abhängigkeit zwischen beiden, wobei meist auoh weitere Fahrzeugparameter in die Berechnung mit eingehen.

Mithilfe der erfindungsgemäßen Vorrichtung 1, die die Verarbeitungseinheit 2 und vorzugsweise auch eine (separate oder in die Vorrichtung oder deren Verarbeitungseinheit oder in eine andere Komponente der Vorrichtung integrierte) Steuereinheit 5 aufweist, läßt sich eine beliebige Fahrzeugkomponente FK des Fahrzeugs 20 steuern.

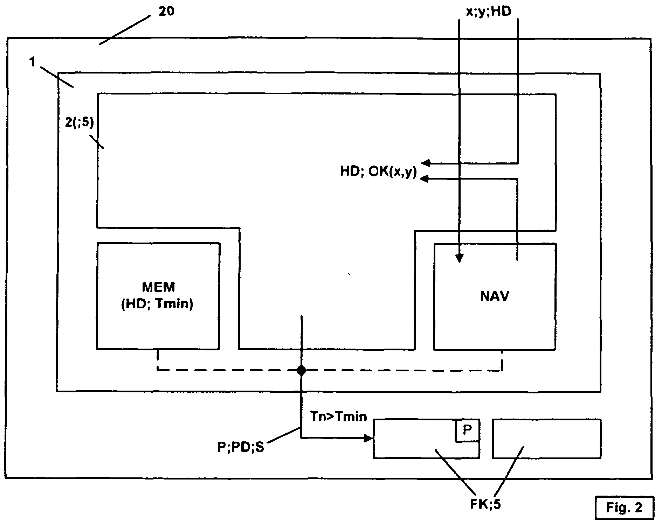

Figur 2 zeigt schematisch eine Ausführungsform der erfindungsgemäßen Vorrichtung 1 des Fahrzeugs 20 oder für ein Fahrzeug 20 (d.h. vor dem Einbau in das Fahrzeug). Die Vorrichtung 1 umfaßt eine Verarbeitungseinheit 2, die Höhenpositionsdaten HD einer zu befahrenden Fahrtstrecke F verarbeitet. Diese Verarbeitung dient zur Berechnung einer Prognose P über vor allem zukünftige Schubbetriebsphasen SPn, wobei die Prognose in Form von Prognosedaten PD und/oder von Steuersignalen S ausgegeben wird. Die Prognosedaten PD und/oder Steuersignale S können etwa von der Verarbeitungseinheit 2 an mindestens eine zu steuernde Fahrzeugkomponente FK übermittelt werden. Dort oder auch in der erfindungsgemäßen Vorrichtung selbst können ferner Fahrzeugparameter p gespeichert sein, die ebenfalls bei der Steuerung berücksichtigt werden.

Die Vorrichtung 1 kann ferner ein Navigationssystem NAV umfassen, das zum Emfangen der Höhenpositionsdaten HD und vorzugsweise auch der Ortskoordinaten OK; x, y; L des (insbesondere schon fahrenden) Fahrzeugs 20 dient. Auf diese Weise kann vor oder während der Fahrt eine Vorausberechnung der iner Prognose erfolgen, welche voraussichtlich auftretende Schubbetriebsphasen im Vorhinein erkennt und in die Steuerung von Fahrzeugkomponenten FK im Vorhinein mit einbezieht.

Die Vorrichtung 1 kann ferner eine Speichereinrichtung MEM umfassen, die zur Speicherung etwa der Höhenpositionsdaten HD oder von Fahrzeugparametern p dient. Ferner können auch die momentanen Ortskoordinaten OK des fahrenden Fahrzeugs in der Speichereinrichtung MEM während der Fahrt gespeichert sein. Es kann auch ein Grenzwert Tmin für die minimale zeitliche Dauer von Schubbetriebsphasen, oberhalb derer erst eine technische Ausnutzung der jeweiligen Schubbetriebsphase erfolgen soll, in der Speichereinrichtung MEM gespeichert sein. Die Einheiten MEM und/oder NAV können ebenso in die Verarbeitungseinheit 2 integriert sein oder als separate Einheiten außerhalb der Vorrichtung 1 ausgebildet sein.

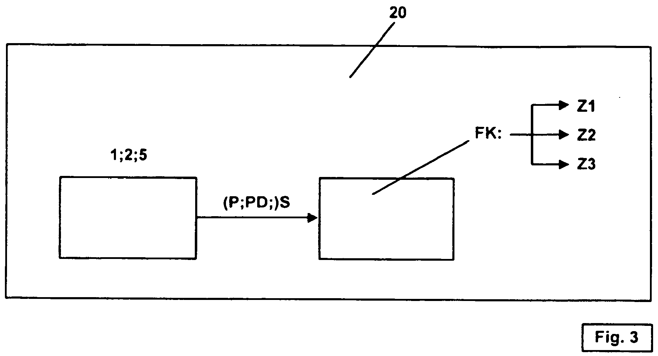

Figur 3 zeigt schematisch die mithilfe der erfindungsgemäßen Vorrichtung 1 ermöglichte, unter Berücksichtigung von Höhenpositionsdaten erfolgende Steuerung einer beliebigen Fahrzeugkomponente FK des Fahrzeugs 20. Infolge der Prognose werden Steuersignale S an die Fahrzeugkomponente FK oder an deren Steuereinrichtung übermittelt, um die Fahrzeugkomponente unter Berücksichtigung prognostizierter Schubbetriebsphasen zu steuern. Herkömmlich bleiben zukünftige Schubbetriebsphasen (oder in der Zukunft liegende Teile momentan noch andauernder Schubbetriebsphase) bei der Steuerung unberücksichtigt. Infolge der erfindungsgemäß optimierten Steuerung kann beispielsweise die Entscheidung, ob und wann eine Fahrzeugkomponente wahlweise in einem ersten Betriebszustand Z1 oder in einem zweiten Zustand Z2 oder einem sonstigen weiteren Zustand Zn betrieben wird, unter Berücksichtigung zukünftiger Schubbetriebssphasen getroffen werden und so die Steuerung der Fahrzeugkomponenten verbessert werden. So kann beispielsweise dann, wenn die zeitlich Dauer einer zukünftigen Schubbetriebsphase eine vorgesehene Mindestdauer Tmin voraussihctlich überschreiten wird, die Fahrzeugkomponente während dieser Schubbetriebsphase oder zeitweise während dieser Schubbetriebsphase im Zustand Z1 betrieben werden und ansonsten in anderen Zuständen betrieben werden. Ferner kann die Fahrzeugkomponente - wie in den Unteransprüchen im einzelnen beansprucht - auf verschiedene Art und Weise gesteuert sein, insbesonder hinsichtlich Art und Funktion der jeweiligen Zustände und der Entscheidung, welcher Zustand wann angenommen werden soll. Die Fahrzeugkomponente kann beispielsweise ein Druckluftsystem, ein Bremssystem, eine Lichtmaschine oder eine beliebige sonstige Komponente eines Fahrzeugs, insbesondere eines Nutzfahrzeugs sein.

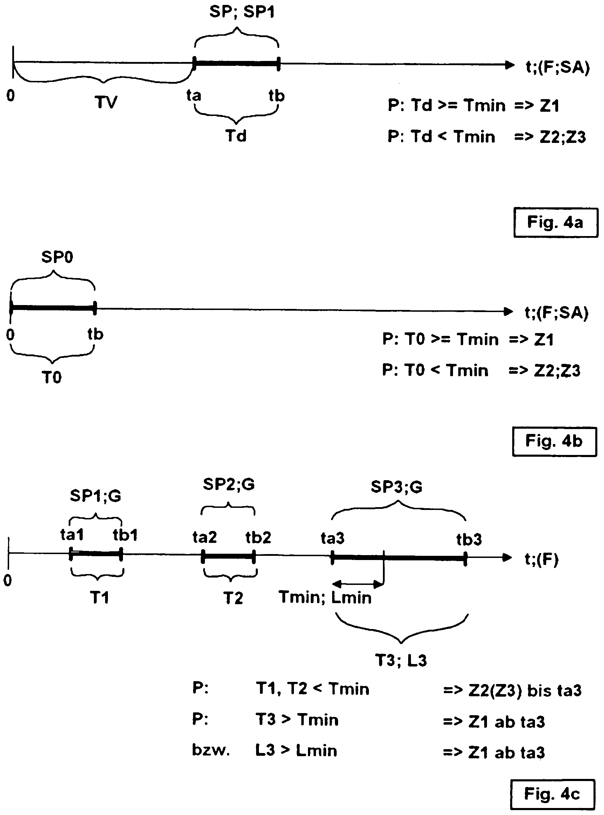

Die Figuren 4A bis zeigen 4C exemplarisch einige (auch miteinander kombinierbare) Ausführungsarten der Erfindung hinsichtlich der zeitlichen Vorausberechnung von Schubbetriebsphasen. Dargestellt ist jeweils ein Zeitstrahl, beginnend mit dem gegenwärtigen Zeitpunkt t=0 und für einen zukünftigen Zeitraum t>0 dargestellt. Dieser Zeitraum kann einen Zeitraum darstellen, der für das Befahren einer zu befahrenden bzw. vorgesehenen Fahrtstrecke F oder eines vorausliegenden Streckenabschnitts SA vorgesehen ist, und entspricht gleichermaßen der Wegkoordinate (etwa dem voraussichtlichen km-Stand) des Fahrzeugs entlang der Fahrtstrecke F oder des jeweils nächsten vorausliegendene Streckenabschnitts SA.

Gemäß Figur 4A wird hierfür bzw. für einen bald bevorstehenden Zeitraum (in der Größenordnung etwa von einigen Sekunden bis zu mehreren Minuten) eine Schubbetriebsphase SP bzw. eine erste, bevorstehende Schubbetriebsphase SP1 vorausberechnet. Hierbei kann etwa mithilfe der Höhenkoordinaten der Fahrtstrecke eine Gefällestrecke ermittelt werden. Der zeitliche bwz. räumliche Beginn der Schubbetriebsphase muß jedoch nicht mit dem Beginn und Ende der Gefällestrecke übereinstimmen, sondern kann etwa aufgrund von anfänglichen Parameterwerten des Fahrzeugs bei Erreichen der Gefällestrecke und deren weitere Auswirkung von der Gefällestrecke selbst abweichen. In Figur 4A wird nach einer Zeitdauer TV das Eintreten der Schubbetriebsphase SP bzw. SP1 vorausberechnet, mit voraussichtlichen Anfangs- und Endzeitpunkten ta und tb und einer Zeitdauer Td. Diese Prognose P ermöglicht eine technische Ausnutzung der Schubbetriebsphase. Zusätzlich kann überprüft werden, ob die voraussichtliche Dauer Td der Schubbetriebsphase eine vorgegebene Mindestdauer Tmin überschreitet. Ferner kann die Steuerung (einer beliebigen Fahrzeugkomponente) in der Weise erfolgen, daß nur unter der Bedingung, daß die Dauer Td der Schubbetriebsphase größer ist als die Mindestdauer Tmin, die Schubbetriebsphase auch tatsächlich technisch ausgenutzt wird (anstatt in jedem Fall, unabhängig von ihrer Dauer Td).

Die Ausnutzung einer Schubbetriebsphase kann etwa dadurch erfolgen, daß eine Fahrzeugkomponente oder eine beliebige sonstige Vorrichtung am oder im Fahrzeug von einen ersten Zustand Z1, der beispielsweise zeitlich außerhalb von Schubbetriebsphasen vorliegt, in einen zweiten Zustand Z2 oder in weitere Zustände Z3, .- geschaltet wird. Dieses Schalten nach Z2 oder Z3, ... kann auch lediglich eines Teils der Dauer Td der Schubbetriebsphase SP erfolgen bzw. vorgesehen sein (statt durchgängig während der gesamten Zeitdauer Td). Insbesondere kann ein technischer Vorgang (auch relativ kurzer Zeitdauer) zeitlich so synchronisiert werden, daß er innerhalb der Zeitspanne zwischen ta und tb durchgeführt wird.

Ebenso können schon weitere nachfolgende Schubbetriebsphasen vorausberechnet werden; in Figur 4A ist lediglich der Einfachheit halber nur eine einzige nächste, vorausberechnete Schubbetriebsphase dargestellt.

Wie in Figur 4B dargestellt, kann ebenso für eine bereits begonnene Schubbetriebsphase, die momentan, d.h. zum Zeitpunkt t=0, noch andauert, eine Prognose für die noch verbleibende Dauer T0 dieser Schubbetriebsphase bzw. deren Endzeitpunkt tb errechnet werden. Eine technische Ausnutzung der Schubbetriebsphase (etwa durch Schalten einer Komponente in einen anderen Zustand als Z1) kann beispielsweise dann oder bevorzugt dann veranlaßt werden, wenn die prognostizierte weitere Dauer T0 eine Mindestdauer Tmin voraussichtlich überschreiten wird. Ferner kann gemäß den Figuren 4A und 4B auch eine kombinierte Prognose für gegenwärtig andauernde und in der Zukunft liegende Schubbetriebsphasen erstellt werden.

Gemäß Figur 4C kann ferner für momentane und/oder zukünftige Schubbetriebsphasen SP1, SP2, deren zeitliche Dauer T1, T2 jeweils voraussichtlich kleiner ist als eine vordefinierte zeitliche Mindestdauer Tmin und die einer errechneten frühesten zukünftigen Schubbetriebsphase SP3 größerer Dauer T3 als Tmin vorangehen, die technische Ausnutzung der vorangehenden Schubbetriebsphasen SP1, SP2 unterbunden werden. Hierbei wird die durch die Prognose gewonnene Erkenntnis ausgenutzt, daß eine zeitlich noch länger andauernde Schubbetriebsphase SP3 zu erwarten ist, die eine noch effizientere oder stärker energiesparende technische Ausnutzung als die vorangehenden Schubbetriebsphasen SP1, SP2 kürzerer Dauer ermöglicht. Die technische Ausnutzung einer jeweiligen Schubbetriebsphase kann etwa in Form einer Energiegewinnung und/oder Energiespeicherung in oder für eine beliebige Fahrzeugkomponente erfolgen. Die zeitliche Dauer einer Schubbetriebsphase kann auch in Form eines voraussichtlich im Schubbetrieb zu passierenden Streckenabschnitts einer Fahrtstrecke ausgedrückt werden, beispielsweise für die Schubbetriebsphase SP3 etwa in Form einer Streckenlänge Lmin (die für diese Schubbetriebsphase SP3 größer ist als eine vorgegebene Mindeststreckenlänge Lmin). Die technische Ausnutzung kann wiederum beispielsweise in Form eines Schaltens einer Komponente in einen anderen Zustand, beispielsweise (umgekehrt wie anhand der Figuren 4A und 4B erläutert) nach Z1 (statt sonst Z2 oder Z3) erfolgen oder umgekehrt.

Selbstverständlich kann (und wird in der Regel) die Veranlassung einer technischen Ausnutzung von Schubbetriebsphase unter Berücksichtigung weiterer Fahrzeug- oder Komponenten-Parameter erfolgen. Die zeitliche Abfolge und Dauer aller vorausberechneten Schubbetriebsphasen und auch derjenigen Schubbetriebsphasen, die nicht nur vorauserkannt, sondern auch tatsächlich technisch ausgenutzt werden, stellt somit im allgemeinen nicht lediglich ein Abbild des Höhenprofils der befahrenen oder zu befahrenden Fahrtstrecke dar, sondern ergibt sich aus einer komplexeren Abhängigkeit von einer Mehrzahl von Einflußgrößen, wobei das Höhenprofil der Fahrtstrecke eine dieser Einflußgrößen darstellt.

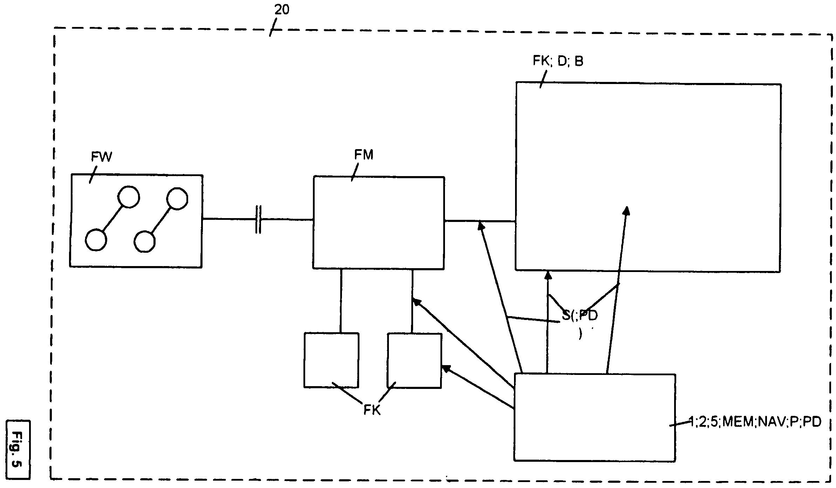

Figur 5 zeigt schmatisch einige Komponenten eines Fahrzeugs mit der erfingsgemäßen Steuereinrichtung 1 bzw. Vorrichtung 1 gemäß einer möglichen Ausführungsform. Die unter Berücksichtigung von Schubbetriebsphasen gesteuerte Komponente kann insbesondere ein Druckluftsystem D, etwa ein Bremssystem B sein. Es können zusätzlich auch weitere Fahrzueugkomponenten FK durch die erfindungsgemäße Steuereinrichtung 1 gesteuert sein. Die Steuereinheit 1 ist in Figur 5 außerhalb der Fahrzeugkomponenten FK dargestellt, kann jedoch ebenso vollständig oder teilweise in diese Komponenten FK integriert sein. Sie kann auch als eigenes Zulieferteil ausgebildet sein, durch das das Fahrzeug oder eine seiner Komponenten (etwa das Druckluftsystem oder ein Teil des Druckluftsystems) nachträglich aufrüstbar ist. Insofern gibt in Figur 5 die Position der Steuereinrichtung 1 lediglich eine von vielen möglichen Ausführungsformen wieder. Die Steuereinrichtung 1 kann die oben beschriebenen Einheiten 2, 5, MEM und/oder NAV umfassen; einzelne oder einige dieser Bestandteile können jedoch auch in der verbessert anzusteuernden Fahrzeugkomponente FK oder in deren Umgebung angeordnet sein. Es lassen sich je nach Ausführungsform nur eine einzige Komponente FK oder auch mehrere Komponenten FK mithilfe der Steuereinrichtung 1 ansteuern, wie in Figur 5 anhand der Pfeile angedeutet. Die jeweilige Komponenten FK, insbesondere das Druckluftsystem D oder das Bemssystem B, kann intern auf beliebige Art und Weise aufgebaut sein. Jede Komponente kann direkt oder indirekt mit einem Fahrzeugmotor FM verbunden sein. Der Fahrzeugmotor FM kann über eine Kupplung mit dem Fahrwerk FW, insbesondere mit den Antriebsrädern verbunden sein.

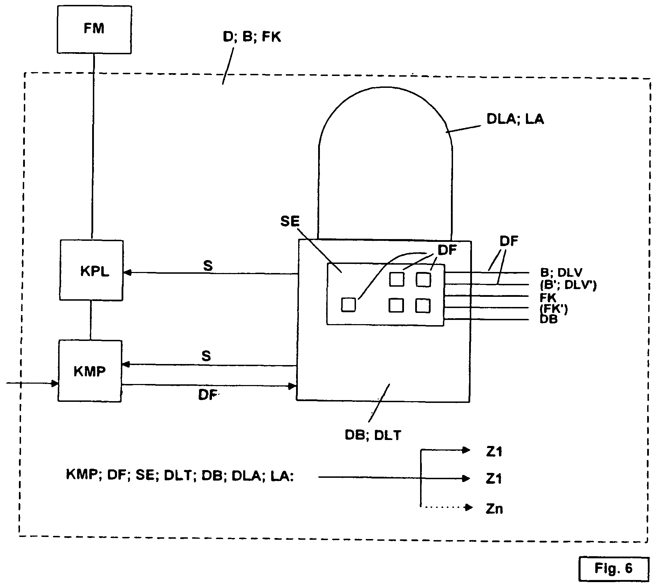

Figur 6 zeigt eine mögliche Ausführungsform einer erfindungsgemäß gesteuerten Fahrzeugkomponente, insbesondere eines Druckluftsystems oder Bremssystems. Es kann unter anderem die in den Unteransprüchen aufgeführten, in Figur 6 abgekürzten Elemente enthalten, insbesondere die Elemente DB, DLT, KMP, DF; DV; SE; DLA; LA; SE; ein oder mehrere Bremskreise (B; B'); ein oder mehrere sonstige Druckluftverbraucher (DLV; DLV') bzw. durch Druckluft gesteuerte Fahrzeugkomponenten FK; FK' bzw. Unterkomponenten. Ferner kann eine Kupplung KPL angesteuert werden. Jede dieser obengenannten Komponenten kann beispielsweise auf die in den jeweiligen Unteransprüchen beanspruchte Art und Weise gesteuert sein. Dabei kann insbesondere je nach Art der erstellten Prognose und der dadurch übermittelten Steuersignale (und/oder Pognosedaten PD) gesteuert werden, wann welche Komponente in welchem Zustand betrieben wird (beispielsweise einem ersten Zustand Z1, einem zweiten Zustand Z2 oder ggfs. auch weiteren Zuständen Zn). Die Entscheidung, wann welcher Betriebszustand veranlaßt wird, kann erfindungsgemäß in Abhängigkeit von Höhenpositionsdaten HD bzw. Höhenprofildaten erfolgen, wodurch die Arbeitsweise der jeweiligen Fahrzeugkomponente verbessert wird.

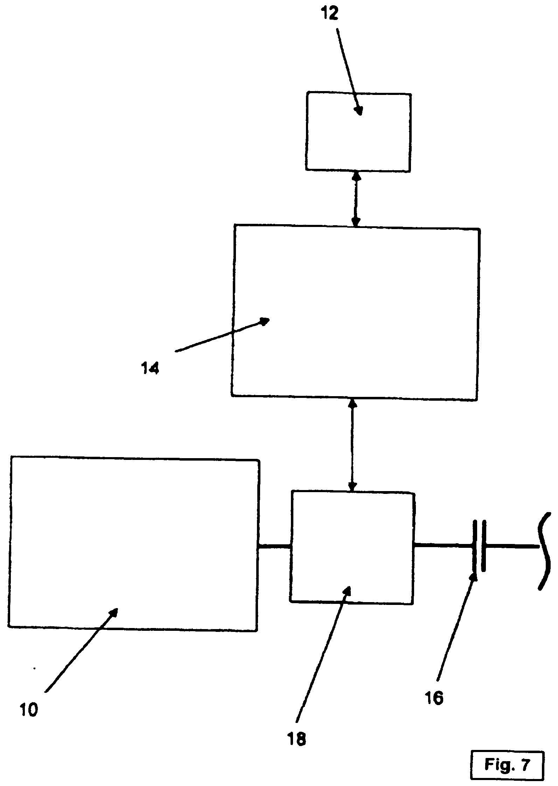

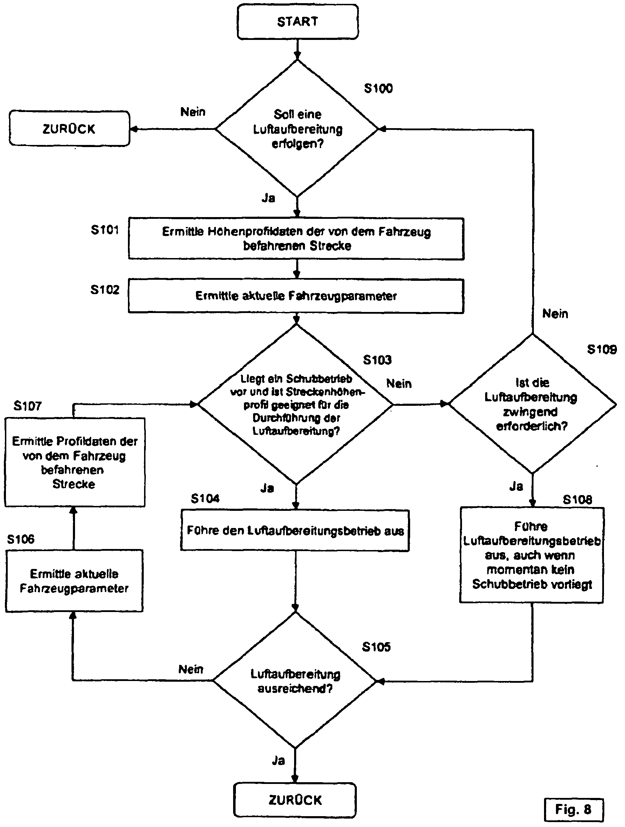

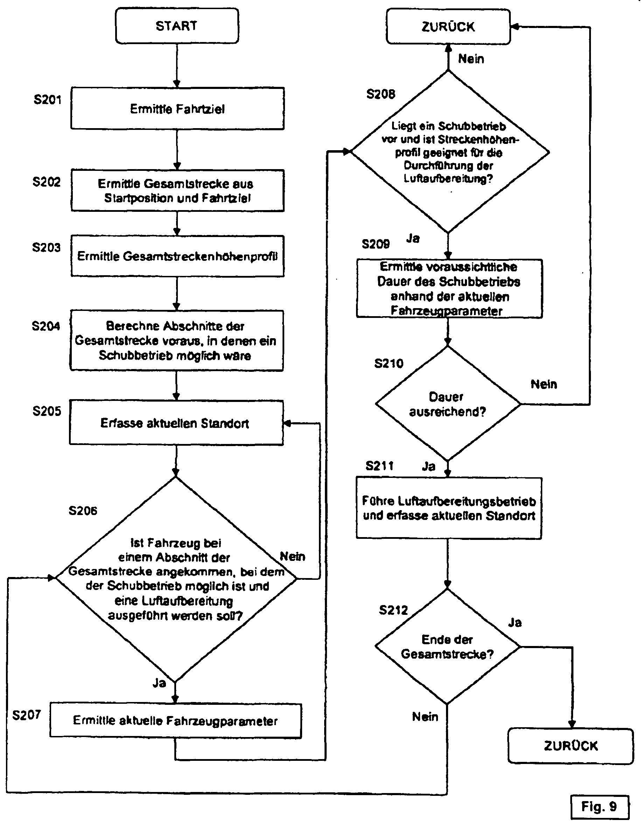

Figur 7 zeigt eine schematische Darstellung einer erfindungsgemäßen Vorrichtung zum Ermitteln eines Schubbetriebs eines Fahrzeugs, die zur Durchführung des erfindungsgemäßen Verfahrens geeignet ist. Bevor das erfindungsgemäße Verfahren anhand der Figuren 8 und 9 erläutert wird, wird zunächst näher auf den Aufbau der erfindungsgemäßen Vorrichtung zum Ermitteln zumindest eines voraussichtlich auftretenden Schubbetriebs eines Fahrzeugs eingegangen. Dabei wird die erfindungsgemäße Vorrichtung in diesem Fall im Zusammenhang mit einer Luftaufbereitungsanlage 10 eines Fahrzeugs beschrieben, wobei ebenso andere Fahrzeugkomponenten anstelle oder parallel zur Luftaufbereitungsanlage 10 im Zusammenhang mit der erfindungsgemäßen Vorrichtung verwendet werden können. Im dargestellten Fall umfasst die erfindungsgemäße Vorrichtung eine Luftaufbereitungsanlage 10, die mit einem nicht näher interessierenden Kompressor 18 pneumatisch gekoppelt ist, wobei der Kompressor 18 zur Luftaufbereitung betreibbar ist. Der Kompressor 18 wird über einen nur teilweise dargestellten Antriebsstrang 16 angetrieben, wobei eine Momentenübertragung zu dem Kompressor 18 über den Antriebsstrang 16 beispielsweise durch eine Kupplung unterbrochen werden kann. Vorzugsweise stammt der Antriebsstrang 16 von einem nicht gezeigten und nicht näher interessierenden Verbrennungsmotor des Fahrzeugs. Der Antriebsstrang 16 kann insbesondere als ein für den Kompressor 18 separater Antriebstrang vorgesehen oder von einem mit einem Getriebe gekoppelten Hauptantriebsstrang des Verbrennungsmotors abgezweigt sein. Der Kompressor 18 wird zur Variation des Luftaufbereitungsbetriebs von einer Verarbeitungseinrichtung beziehungsweise einer Steuereinrichtung 14 oder einem Controller 14 angesteuert. Vorzugsweise dient die Steuereinrichtung 14 ebenso zur Unterbrechung der Momentenübertragung zu dem Kompressor 16 durch Ansteuerung der Kupplung. Die Steuereinrichtung 14 ist in diesem Fall eine dem Fachmann bekannte Steuereinrichtung, die Berechnung-, Verarbeitungs- Steuerungs- und Regelungsfunktionen ausführen kann. Die Steuereinrichtung 14 bezieht unter anderem über eine zum Datenaustausch geeignete Verbindung Daten- beziehungsweise Informationen von einem Navigationssystem 12. Das Navigationssystem 12 ist in diesem Fall ein herkömmliches Navigationssystem 12, das dazu geeignet ist, neben mit Positionsangaben des Fahrzeugs korrelierende Daten auch mit Höhenangaben korrelierende Daten an die Steuereinrichtung 14 zu übermitteln. Insbesondere ist das Navigationssystem 12 dazu geeignet, der Steuereinrichtung 14 mit Streckenhöhenprofilen korrelierende Daten zu liefern, aus denen sich Gefälle und Steigungen der entsprechenden durch das Fahrzeug befahrenen oder zu befahrenden Strecken berechnen lassen.

Figur 8 zeigt ein Flussdiagramm eines erfindungsgemäßen Verfahrens zum Ermitteln eines voraussichtlich auftretenden Schubbetriebs in Zusammenhang mit der Luftaufbereitungsanlage 10 von Figur 7 gemäß einem ersten Ausführungsbeispiel der Erfindung. Die folgenden Schritte werden in diesem Ausführungsbeispiel gänzlich von der Verarbeitungseinrichtung beziehungsweise der Steuereinrichtung 14 durchgeführt. In diesem Zusammenhang sei angemerkt, dass die Steuerung auch von unterschiedlichen Verarbeitungs- oder Steuereinrichtungen, die miteinander in Kommunikation stehen und entsprechend Daten austauschen, ausgeführt werden kann. Zu Beginn des erfindungsgemäßen Verfahrens erfolgt in Schritt S100 eine Abfrage, ob eine Luftaufbereitung beziehungsweise Druckluftförderung mittels eines Luftaufbereitungsbetriebs erfolgen soll. Die Abfrage von Schritt S100 ist beispielsweise an Bedingungen über die in einzelnen mit der Luftaufbereitungsanlage 10 gekoppelten Druckluftkreisen herrschenden Druckluftverhältnisse geknüpft. Unter anderem kann eine Bedingung der Druckluftzustand eines einem Druckluftkreis zugeordneten Druckluftbehälters sein. Die mit der Luftaufbereitungsanlage gekoppelten Druckluftkreise können insbesondere Bremskreise, Nebenverbraucherkreise, ein Anhängerversorgungskreis, ein Feststellbremskreis, ein Luftfederungskreis etc. sein. Wird festgestellt, dass keine Druckluftaufbereitung erfolgen soll, beispielsweise ist ein Druckluftniveau der entsprechenden Druckluftkreise ausreichend, so endet das Verfahren an dieser Stelle und beginnt wieder von vorne. Wird beurteilt, dass eine Druckluftaufbereitung erfolgen soll, beispielsweise ist das Druckluftniveau zumindest eines Druckluftspeichers unter einem vorbestimmten Grenzwert, so schreitet das Verfahren zu Schritt S101 voran. Bei Schritt S101 bezieht die Steuereinrichtung 14 Höhenprofildaten einer von dem Fahrzeug befahrenen und zu befahrenden Strecke. Da in diesem Ausführungsbeispiel dem Navigationssystem 12 kein Fahrtziel vorgegeben wurde, übermittelt das Navigationssystem 12 der Steuereinrichtung 14 aktuelle oder bis zu einem vorbestimmten Ausmaß vorausberechnete Höhenprofildaten der vor dem Fahrzeug liegenden Strecke. In diesem Fall umfassen die Höhenprofildaten der vom dem Fahrzeug befahrenen Strecke die Streckenprofildaten von der aktuellen Position des Fahrzeugs bis zu einer vorbestimmten Position. Vorzugsweise wird die vor dem Fahrzeug liegende Strecke durch die Länge der Straße vorgegeben, in der sich das Fahrzeug zum aktuellen Zeitpunkt befindet. Die vorbestimmte Position ist frei festlegbar und kann beliebig zwischen der aktuellen Position des Fahrzeugs und dem Ende der Straße vorbestimmt sein. Aus den Höhenprofildaten der von dem Fahrzeug befahrenen Strecke berechnet die Steuereinrichtung 14 dann Steigungen und Gefälle an der aktuellen Position des Fahrzeugs und/oder des Streckenverlaufs bis zur vorbestimmten Position. Als nächstes werden in Schritt S102 aktuelle Fahrzeugparameter ermittelt. Die aktuellen Fahrzeugparameter umfassen unter Anderem zumindest ein Element aus von dem Navigationssystem 12 bezogene Positions- und Höhendaten des Fahrzeugs, von einem Fahrerassistenzsystem bezogene Abstandsdaten zu einem bezüglich des Fahrzeugs vorausfahrenden weiteren Fahrzeug, eine Fahrzeuggeschwindigkeit, insbesondere Radgeschwindigkeiten und/oder Gierraten, eine Fahrzeugbeschleunigung, das aktuelle Druckluftniveau der Bremsanlage, ein Feuchtigkeitsniveau einer Druckluftpatrone der Bremsanlage, eine Motordrehzahl, ein Motormoment sowie dessen Vorzeichen, Kupplungs- und/oder Gangdaten des Fahrzeugs und Retarderdaten des Fahrzeugs etc. Nach der Ermittlung der aktuellen Fahrzeugparameter in Schritt S102 schreitet das Verfahren zu Schritt S103 voran. In Schritt S103 erfolgt zum einen eine Abfrage, ob ein Schubbetrieb des Fahrzeugs vorliegt. Die Ermittlung des Schubbetriebs des Fahrzeugs erfolgt in diesem Ausführungsbeispiel zumindest teilweise in Abhängigkeit von einem oder mehreren der aktuellen Fahrzeugparameter und kann zusätzlich auch in Abhängigkeit von den Höhenprofildaten der befahrenen Strecke erfolgen. Zum anderen wird abgefragt, ob die ermittelten Höhenprofildaten der Strecke dafür geeignet sind, einen Luftaufbereitungsbetrieb durchzuführen. Insbesondere bei Vorliegen eines Gefälles der Strecke wird beurteilt, dass die Durchführung des Luftaufbereitungsbetriebs vorgenommen werden kann. Werden die Höhenprofildaten von der aktuellen Position bis zu der vorbestimmten Position vorausberechnet, so kann die Beurteilung auch unter Berücksichtigung der vor dem Fahrzeug liegenden Strecke erfolgen, beispielsweise anhand der Länge des Gefälles. Ist die Länge des Gefälles groß genug, so wird die Durchführung des Luftaufbereitungsbetriebs besonders begünstigt. Wird in Schritt S103 festgelegt, dass ein Schubbetrieb des Fahrzeugs vorliegt und das Streckenhöhenprofil für die Durchführung des Luftaufbereitungsbetriebs geeignet ist, schreitet das Verfahren zu Schritt S104 voran, in dem der Luftaufbereitungsbetrieb ausgeführt wird. Insbesondere wird in diesem Fall der Kompressor 18 zur Druckluftförderung beziehungsweise Druckluftbeschaffung zu den entsprechenden Druckluftkreisen betrieben. Anschließend wird in Schritt S105 beurteilt, ob die Luftaufbereitung von Schritt S104 ausreichend war. Beispielsweise erfolgt diese Beurteilung anhand einer Überprüfung des Druckluftniveaus der Luftbehälter der entsprechenden Druckluftkreise. War die Luftaufbereitung ausreichend, so endet das Verfahren und beginnt wieder von vorne. Wird jedoch beurteilt, dass die Luftaufbereitung nicht ausreichend war, so werden in den Schritten S106 und S107 erneut die aktuellen Fahrzeugparameter und die Höhenprofildaten der befahrenen Strecke analog zu den Schritten S101 und S102 ermittelt. Dies rührt daher, dass sich inzwischen Änderungen der entsprechenden Daten ergeben haben könnten, da sich die Position des Fahrzeugs inzwischen geändert haben kann. Anschließend erfolgt wieder die vorgenannte Abfrage in Schritt S103. Wird in Schritt S103 entschieden, dass kein Schubbetrieb des Fahrzeugs vorliegt oder das Streckenhöhenprofil für die Durchführung des Luftaufbereitungsbetriebs ungeeignet ist, so schreitet das Verfahren zu Schritt S109 voran. Dort erfolgt eine weitere Abfrage, ob die Luftaufbereitung zwingend erforderlich ist. Dies kann beispielsweise dann der Fall sein, wenn zumindest ein Druckluftniveau eines Druckluftbehälters eines entsprechenden Druckluftkreises unter ein kritisches Niveau gesunken ist. Ist dies der Fall, so wird auch dann, wenn momentan kein Schubbetrieb des Fahrzeugs vorliegt oder aufgrund eines ungeeigneten Streckenhöhenprofils, der Luftaufbereitungsbetrieb ausgeführt. Anschließend erfolgt erneut die vorstehend erläuterte Abfrage des Schritts S105. Wird in Schritt S109 jedoch festgelegt, das eine Luftaufbereitung nicht zwingend erforderlich ist, beispielsweise ist das Druckluftniveau über dem kritischen Niveau, so kehrt das Verfahren zu dem vorstehend beschriebenen Schritt S100 zurück.

Figur 9 zeigt ein Flussdiagramm des erfindungsgemäßen Verfahrens zum Ermitteln eines voraussichtlich auftretenden Schubbetriebs im Zusammenhang mit der Luftaufbereitungsanlage 10 von Figur 7 gemäß einem zweiten Ausführungsbeispiel der Erfindung. Das erfindungsgemäße Verfahren beginnt in diesem Ausführungsbeispiel bei Schritt S201 mit der Ermittlung eines Fahrtziels, das in das Navigationssystem 12 eingegeben wurde und der Steuereinrichtung 14 übermittelt wird. Weiterhin bezieht die Steuereinrichtung 14 in Schritt S202 die von dem Fahrzeug befahrene und zurückzulegende Gesamtstrecke von dem Navigationssystem 12, die sich aus jeweils der aktuellen Startposition und dem Fahrtziel des Fahrzeugs ergibt. Ebenso übermittelt das Navigationssystem 12 bei Schritt S203 ein Gesamtstreckenhöhenprofil der zurückzulegenden Gesamtstrecke an die Steuereinrichtung 14. Daraus berechnet die Steuereinrichtung 14 anschließend in Schritt S204 Abschnitte der Gesamtstrecke voraus, in denen ein Schubbetrieb des Fahrzeugs auftreten könnte und die für die Durchführung eines Luftaufbereitungsbetriebs geeignet wären. In Schritt S205 wird der aktuelle Standort des Fahrzeugs bezogen. Anschließend erfolgt in Schritt S206 eine Abfrage, ob das Fahrzeug bei einem berechneten Abschnitt, bei dem ein Schubbetrieb möglich wäre, angekommen ist, und ob eine Luftaufbereitung ausgeführt werden soll. Dabei hängt die Abfrage der Ausführung der Luftaufbereitung von den gleichen Kriterien ab, wie bei Schritt S100 von Figur 8. Wenn das Fahrzeug nicht bei dem vorausberechneten Abschnitt angekommen ist oder keine Luftaufbereitung ausgeführt werden soll, kehrt das Verfahren zu Schritt S205 solange zurück, bis beide in Schritt S206 abgefragten Bedingungen erfüllt sind. Es wird angemerkt, dass in diesem Fall auf eine Abfrage gemäß den Schritten S109 und S108 der Einfachheit halber verzichtet wurde. Jedoch wird in jedem Fall ein Luftaufbereitungsbetrieb ausgeführt, falls dies zwingend erforderlich ist, wie vorstehend im Zusammenhang mit den Schritten S109 und S108 beschrieben ist. Sind die Bedingungen der Abfrage von Schritt S206 erfüllt, so schreitet das Verfahren zu Schritt S207 voran, in dem die aktuellen Fahrzeugparameter analog zu Schritt S102 von Figur 8 ermittelt werden. Anschließend wird der Schritt S208 ausgeführt, in dem in gleicher Weise wie in Schritt S103 von Figur 8 abgefragt wird, ob ein Schubbetrieb vorliegt und vorzugsweise ein weiteres mal verifiziert wird, ob das Streckenhöhenprofil für die Durchführung des Luftaufbereitungsbetriebs geeignet ist. Ist dies nicht der Fall, so endet das Verfahren und beginnt gegebenenfalls von vorne. Wird in Schritt S208 festgelegt, dass der Schubbetrieb des Fahrzeugs und entsprechende Eignung des Streckenhöhenprofils vorliegen, so schreitet das Verfahren zu Schritt S209 voran. Dort wird eine voraussichtliche Dauer des Schubbetriebs anhand der aktuellen Fahrzeugparameter ermittelt. Insbesondere wird die Dauer des Schubbetriebs zumindest aus der Fahrzeuggeschwindigkeit und dem dem Fahrzeug vorausliegendem Streckenabschnitt ermittelt. Als nächstes wird der Schritt S210 ausgeführt, in dem abgefragt wird, ob die Dauer ausreichend für das Ausführen des Luftaufbereitungsbetriebs ist. Insbesondere wird die berechnete voraussichtliche Dauer mit einem vorbestimmten Grenzwert verglichen, der eine Mindestdauer des Schubbetriebs angibt und beliebig festlegbar ist. Ist die voraussichtliche Dauer nicht ausreichend, so endet das Verfahren und beginnt gegebenenfalls von vorne. Ist die Dauer ausreichend, so wird in Schritt S211 der Luftaufbereitungsbetrieb ausgeführt und anschließend der aktuelle Standort des Fahrzeugs ermittelt. Alternativ oder zusätzlich kann bei Schritt S210 ebenso der Abstand zu einem vorausfahrenden Fahrzeug überprüft werden und analog zu der Beurteilung der voraussichtlichen Dauer des Schubbetrieb anhand der Abstanddaten beurteilt werden, ob eine Luftaufbereitung durchgeführt werden soll. Anschließend wird in Schritt S212 abgefragt, ob das Ende der Gesamtstrecke, das heißt das Fahrtziel, erreicht wurde. Ist dies nicht der Fall, so kehrt das Verfahren zu dem Schritt S206 zurück und verbleibt in der Abfrageschleife S206 und S205, bis der nächste vorausberechnete Abschnitt erreicht wird, bei dem ein Schubbetrieb möglich wäre. Wird bei Schritt S212 festgestellt, dass das Ende der Gesamtstrecke erreicht wurde, so endet das Verfahren und beginnt gegebenenfalls erneut von vorne.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Steuereinrichtung
- 2: Verarbeitungseinheit
- 10: Luftaufbereitungsanlage
- 12: Navigationssystem
- 14: Steuereinrichtung
- 16: Antriebsstrang
- 18: Kompressor
- 20: Fahrzeug
- B: Bremssystem
- D: Druckluftsystem
- DF: Förderleitung für Druckluft
- DL: Druckluft
- DLA: Druckluftaufbereitungseinheit
- DB: Druckluftbehälter
- DLV: Druckluftverbraucher
- DLT: Druckluftverteiler
- DP: Druckluftpatrone
- DV: Druckluftventil
- E: Entfernung
- F: Fahrtstrecke
- FK: Fahrzeugkomponente
- FM: Fahrzeugmotor
- G: Gefälle
- GS: Gefällestrecke
- HD: Höhenpositionsdaten
- K: Komponente des Druckluftsystems
- KMP: Kompressor
- KPL: Kupplung
- L: Länge
- LA: Luftaufbereitungseinheit
- Lmin: Mindestlänge
- MEM: Speichereinheit
- NAV: Navigationssystem
- OK: Ortskoordinaten
- p: Fahrzeugparameter
- P: Progose
- PD: Prognosedaten
- R: Fahrtrichtung
- S: Steuersignal
- SA: Streckenabschnitt
- SE: Schalteinheit
- SP;: SPn Schubbetriebsphase
- SP0: momentane Schubbetriebsphase
- ta: Zeitpunkt des Beginns einer Schubbetriebsphase
- tb: Zeitpunkt der Beendigung einer Schubbetriebsphase
- Td;: Tn zeitliche Dauer einer Schubbetriebsphase
- Tmin: Mindestdauer
- TV: zeitlicher Abstand zu Schubbetriebsphase
- T0: verbleibende Dauer einer momentanen Schubbetriebsphase
- Z1: erster Zustand
- Z2: zweiter Zustand
- Zn: weiterer Zustand
- x; y: geographische Position
- z: vertikale Position

## Patentansprüche

1. Steuereinrichtung (1) für ein Druckluftsystem (D) eines Fahrzeugs (20) oder für eine Komponente (K) eines Druckluftsystems (D) eines Fahrzeugs (20), wobei die Steuereinrichtung (1) zumindest eine Verarbeitungseinheit (2) aufweist,
- die unter Berücksichtigung von Höhenpositionsdaten (HD) einer von dem Fahrzeug befahrenen oder noch zu befahrenden Fahrtstrecke (F) eine Prognose (P) über das Auftreten und die Dauer (Td) von Schubbetriebsphasen (SP; SPn) des Fahrzeugs (20) errechnet und
- die das Druckluftsystem (D), eine Komponente (K) des Druckluftsystems (D) oder eine zum Betrieb des Druckluftsystems (D) vorgesehene Komponente unter Berücksichtigung der errechneten Prognose (P) steuert,
**dadurch gekennzeichnet, dass** die Verarbeitungseinheit (2) dazu eingerichtet ist, zur Steuerung zu überprüfen, ob die errechnete Prognose über die Dauer (Td) einer Schubbetriebsphase (SP; SPn) länger ist als eine vorgegebene Mindestdauer (Tmin).

2. Steuereinrichtung nach Anspruch 1, **dadurch gekennzeichnet, daß** die Verarbeitungseinheit (2) eine Prognose (P) errechnet, die angibt, ob und wo entlang eines jeweils vorausliegenden Streckenabschnitts (SA) der Fahrtstrecke (F) voraussichtlich Schubbetriebsphasen (SP; SPn) auftreten werden.

3. Steuereinrichtung nach Anspruch 1 oder 2, **dadurch gekennzeichnet, daß** die Verarbeitungseinheit (2) eine Prognose (P) errechnet, die angibt, ob und wann in einem jeweils bevorstehenden Zeitraum Schubbetriebsphasen (SP; SPn) auftreten.

4. Steuereinrichtung nach einem der Ansprüche 1 bis 3, **dadurch gekennzeichnet, daß** die Steuereinrichtung (2) eine Prognose (P) zum voraussichtlichen Zeitpunkt des Beginns (ta) und/oder der Beendigung (tb) von Schubbetriebsphasen (SP; SPn), zum zeitlichen Abstand (TV) bis zum Eintritt von Schubbetriebsphasen (SP; SPn) oder zur zeitlichen Dauer (Tn) von Schubbetriebsphasen (SPn) errechnet.

5. Steuereinrichtung nach einem der Ansprüche 1 bis 4, **dadurch gekennzeichnet, daß** die Verarbeitungseinheit (2) mithilfe der errechneten Prognose (P) die Zeitpunkte (ti) der Durchführung von Schaltvorgängen, durch die die Komponente (K) wahlweise zumindest von einem ersten (Z1) in einen zweiten Zustand (Z2) oder umgekehrt versetzbar ist, unter Berücksichtigung prognostizierter Schubbetriebsphasen (SP; SPn) festlegt.

6. Steuereinrichtung nach einem der Ansprüche 1 bis 5, **dadurch gekennzeichnet, daß** die Verarbeitungseinheit (2) in Abhängigkeit von den Höhenpositionsdaten (HD) der Fahrtstrecke (F) und von Ortskoordinaten (OK) des Fahrzeugs (20) die Komponente (K) in der Weise ansteuert, daß sich die Komponente (K) während der Schubbetriebsphasen (SP; SPn) oder während ausgewählter Schubbetriebsphasen (SPi) in einem ersten Zustand (Z1) befindet und zumindest außerhalb der Schubbetriebsphasen in einem zweiten Zustand (Z2) oder in weiteren Zuständen (Zn) befindet.

7. Steuereinrichtung nach Anspruch 6, **dadurch gekennzeichnet**, (6) daß die Verarbeitungseinheit (2) die Komponente (K) in der Weise ansteuert, daß sich die Komponente (K) während solcher Schubbetriebsphasen (SPi), deren voraussichtliche Dauer (Ti) größer ist als eine vorgegebene Mindestdauer (Tmin), im ersten Zustand (Z1) befindet und sonst im zweiten Zustand (Z2) oder in weiteren Zuständen (Zn) befindet.

8. Steuereinrichtung nach einem der Ansprüche 1 bis 7, **dadurch gekennzeichnet, daß** die Verarbeitungseinheit (2) in zumindest einem Betriebszustand des Druckluftsystems (D) das Druckluftsystem (D), eine Komponente (K) des Druckluftsystems (D) oder eine zum Betrieb des Druckluftsystems (D) vorgesehene Komponente unter Berücksichtigung der errechneten Prognose (P) steuert.

9. Steuereinrichtung nach einem der Ansprüche 1 bis 8, **dadurch gekennzeichnet, daß** die Verarbeitungseinheit (2) eine Fahrzeugkomponente (FK) ansteuert, die zwischen einen Fahrzeugmotor (FM) und zumindest einen Druckluftverbraucher (DLV) des Druckluftsystems (D), etwa ein Bremssystem, mittelbar oder unmittelbar zwischengeschaltet ist.

10. Steuereinrichtung nach einem der Ansprüche 1 bis 9, **dadurch gekennzeichnet, daß** die Verarbeitungseinheit (2) eine Fahrzeugkomponente (FK) ansteuert, die druckluftführenden Komponenten (K) des Druckluftsystems (D) vorgeschaltet ist und eine Einwirkung eines Fahrzeugmotors (FM) auf das Druckluftsystem (D) beeinflußt.

11. Steuereinrichtung nach einem der Ansprüche 1 bis 10, **dadurch gekennzeichnet, daß** die Verarbeitungseinheit (2) eine Kupplung (KPL) ansteuert, die zwischen den Fahrzeugmotor (FM) und einen Kompressor (KMP) des Druckluftsystems (D) zwischengeschaltet ist.

12. Steuereinrichtung nach einem der Ansprüche 1 bis 11, **dadurch gekennzeichnet, daß** die Kupplung (KPL) im ersten Zustand (Z1) den Kompressor (KMP) an den Fahrzeugmotor (FM) koppelt und im zweiten Zustand (Z2) die Kopplung unterbindet oder umgekehrt.

13. Steuereinrichtung nach einem der Ansprüche 1 bis 12, **dadurch gekennzeichnet, daß** die Verarbeitungseinheit (2) zumindest einen Kompressor (KMP) ansteuert, der im ersten Zustand (Z1) Druckluft fördert und/oder zu einem Druckluftverteiler (DLT), einer Druckluftaufbereitungseinheit (DLA), einem Druckluftverbraucher (DLV) oder zu einer anderen Komponente (K) hin weiterleitet und der im zweiten Zustand (Z2) eine anderweitige Förderung und/oder Weiterleitung von Druckluft (D) bewirkt als im ersten Zustand.

14. Steuereinrichtung nach Anspruch 13, **dadurch gekennzeichnet**, (13) daß der Kompressor (KMP) im ersten Zustand (Z1) eine Luftaufbereitungseinheit (LA) mit Druckluft versorgt und im zweiten Zustand (Z2) in einen Leerlaufzustand geschaltet ist, in dem die Luftaufbereitungseinheit (LA) nicht mit Druckluft oder nur mit Druckluft geringeren Drucks als im ersten Zustand (Z1) versorgt wird.

15. Steuereinrichtung nach einem der Ansprüche 1 bis 14, **dadurch gekennzeichnet, daß** die Verarbeitungseinheit (2) ein Druckluftventil (DV) steuert, das im ersten Zustand (Z1) Druckluft (DL) weiterleitet und im zweiten Zustand (Z2) eine Weiterleitung von Druckluft (DL) blockiert oder umgekehrt.

16. Steuereinrichtung nach einem der Ansprüche 1 bis 15, **dadurch gekennzeichnet, daß** die Verarbeitungseinheit (2) einen Druckluftverteiler (DLV) ansteuert, der im ersten Zustand (Z1) Druckluft aufnimmt und weiterleitet und der im zweiten Zustand (Z2) die Aufnahme von Druckluft (DL) unterbindet.

17. Steuereinrichtung nach einem der Ansprüche 1 bis 16, **dadurch gekennzeichnet, daß** die Verarbeitungseinheit (2) eine Druckluftaufbereitungseinheit (DLA), die eine Druckluftpatrone (DLP) aufweist, ansteuert, wobei die Druckluftaufbereitungseinheit (DLA) infolge der mithilfe der errechneten Prognose (P) erfolgenden Steuerung im ersten Zustand (Z1) die Reinigung und Weiterleitung neuer Druckluft (DL) durch die Druckluftpatrone (DP) hindurch bis zu mindestens einem Druckluftverbraucher (DLV), etwa bis zu einem Bremssystem (B), ermöglicht und im zweiten Zustand (Z2) die Druckluftpatrone (DP) regeneriert, insbesondere entfeuchtet und reinigt.

18. Steuereinrichtung nach einem der Ansprüche 1 bis 17, **dadurch gekennzeichnet, daß** die Steuereinrichtung (2) mithilfe der errechneten Prognose (P) das Druckluftsystem (D) oder die Komponente (K) so steuert, daß Zeitpunkte, zu denen eine Regeneration der Druckluftpatrone (DLP), insbesondere eine Entfeuchtung und Reinigung durchgeführt wird, unter Berücksichtigung prognostizierter Schubbetriebsphasen (SP; SPn) beeinflußt, insbesondere zeitlich vorgezogen oder verschoben werden.

19. Steuereinrichtung nach einem der Ansprüche 1 bis 18, **dadurch gekennzeichnet, daß** die Verarbeitungseinheit (2) die Prognose (P) ferner unter Berücksichtigung von Ortskoordinaten (OK), die eine momentane Position (x; y) des Fahrzeugs (20) entlang der Fahrtstrecke (20) angeben, errechnet.

20. Steuereinrichtung nach einem der Ansprüche 1 bis 19, **dadurch gekennzeichnet, daß** die Steuereinrichtung (2) mithilfe der errechneten Prognose (P) das Druckluftsystem (D) oder die Komponente (K) so steuert, daß eine Druckluftförderung und/oder Druckluftaufnahme ausschließlich oder bevorzugt während prognostizierter Schubbetriebsphasen (SP; SPn) erfolgt.

21. Steuereinrichtung nach einem der Ansprüche 1 bis 20, **dadurch gekennzeichnet, daß** die Steuereinrichtung (2) mithilfe der errechneten Prognose (P) das Druckluftsystem (D) oder eine Komponente (K) so steuert, daß eine Druckluftförderung und/oder Druckluftaufnahme ausschließlich oder bevorzugt während solcher Schubbetriebsphasen (SP; SPn) erfolgt, deren Dauer (T) eine vorgegebene, festgelegte oder parameterabhängige Mindestdauer (Tmin) überschreitet.

22. Steuereinrichtung nach einem der Ansprüche 1 bis 21, **dadurch gekennzeichnet, daß** die Verarbeitungseinheit (2) aus den Höhenpositionsdaten (HD) der Fahrtstrecke (F) und aus einer Fahrtrichtung (R) des Fahrzeugs (20) entlang der Fahrtstrecke (F) vorausberechnet, wo auf der Fahrtstrecke (F) oder auf einem unmittelbar vorausliegenden Streckenabschnitt (SA) der Fahrtstrecke jeweils eine Gefällestrecke (GS) in Fahrtrichtung (R) auftreten wird.

23. Steuereinrichtung nach einem der Ansprüche 1 bis 22, **dadurch gekennzeichnet, daß** die Verarbeitungseinheit (2) ein zeitlicher Abstand (TV) bis zu bevorstehenden Schubbetriebsphasen (SP), die zeitliche Dauer (Td; Tn) der Schubbetriebsphasen (SP) selbst und/oder die Zeitpunkte (ta; tb) ihres Beginns und/oder ihrer Beendigung mithilfe der vorausberechneten Gefällestrecken (GS) errechnet.

24. Steuereinrichtung nach einem der Ansprüche 1 bis 23, **dadurch gekennzeichnet, daß** die Verarbeitungseinheit (2) für die voraussichtliche Zeitdauer (T0; Tn) bereits begonnener und/oder bevorstehender Schubbetriebsphasen (SP0; SPn) eine Prognose (P) errechnet und mit einer vorgegebenen Mindestdauer (Tmin) vergleicht und veranlaßt, daß ausschließlich oder überwiegend solche Schubbetriebsphasen (SPi), deren errechnete Zeitdauer (Ti) größer ist als die vorgegebene Mindestdauer (Tmin), zur Förderung von Druckluft (DL) durch einen Kompressor (KMP) in Richtung eines Druckluftverteilers (DLT) oder mindestens eines Druckluftverbrauchers (DLV) wie etwa eines Bremssystemes (B), zur Luftaufnahme durch einen Druckluftverteiler (DLT), zur Schaltung mindestens eines Druckluftventils (DV) von einem ersten Zustand (Z1) in einen zweiten Zustand (Z2) und/oder zum Schalten einer Kupplung (KPL) genutzt werden.

25. Steuereinrichtung nach einem der Ansprüche 1 bis 24, **dadurch gekennzeichnet, daß** die Verarbeitungseinheit (2) zur Steuerung errechnet, nach welcher Entfernung entlang der Fahrtstrecke und/oder nach welcher Fahrzeit die erste Schubbetriebsphase (SPi), deren Dauer voraussichtlich die vorgegebene Mindestdauer (Tmin) überschreiten wird, eintreten wird.

26. Steuereinrichtung nach einem der Ansprüche 1 bis 25, **dadurch gekennzeichnet, daß** die Verarbeitungseinheit (2) die Länge (L) vorausliegender Gefällestrecken (GS) mit einer vorgegebenen Mindestlänge (Lmin) vergleicht und Prognosedaten (PD) ausgibt, die eine gezielte Ausnutzung von Schubbetriebsphasen (SP) auf lediglich solchen Gefällestrecken (GS) ermöglicht, deren Länge (L) die vorgegebene Mindestlänge (Lmin) überschreitet.

27. Steuereinrichtung nach Anspruch 26, **dadurch gekennzeichnet**, (26) daß die Verarbeitungseinheit (2) für den Vergleich Grenzwerte (G) verwendet, die von einem oder von mehreren momentanen Fahrzeugparametern (p) abhängigen.

28. Steuereinrichtung nach einem der Ansprüche 1 bis 27, **dadurch gekennzeichnet, daß** die Verarbeitungseinheit (2) stets für eine bereits begonnene, momentane Schubbetriebsphase (SP0) eine Prognose (P) über die voraussichtlich verbleibende zeitliche Dauer (TO) dieser Schubbetriebsphase (SP0) errechnet.

29. Steuereinrichtung nach einem der Ansprüche 1 bis 28, **dadurch gekennzeichnet, daß** die Verarbeitungseinheit (2) jeweils für eine voraussichtlich bevorstehende oder bereits begonnene Schubbetriebsphase (SP0; SPn) ein Steuersignal (S) erzeugt, das in Abhängigkeit von der voraussichtlich verbleibenden zeitlichen Dauer (T) dieser Schubbetriebsphase (SP) festlegt, ob eine technische Ausnutzung dieser Schubbetriebsphase (SP), die eine Erzeugung, Förderung, Weiterleitung, Aufbereitung oder Speicherung von Druckluft (DL) für mindestens eine Fahrzeugkomponente (FK) bewirkt, veranlaßt wird oder nicht.

30. Steuereinrichtung nach Anspruch 29, **dadurch gekennzeichnet**, (29) daß die Verarbeitungseinheit (2) jeweils für eine bereits begonnene Schubbetriebsphase (SP0) ein Steuersignal (S) erzeugt, das dann, wenn die voraussichtlich noch verbleibende zeitliche Dauer (T) der momentanen Schubbetriebsphase (SP0) einen vordefinierten Grenzwert (Tmin) überschreitet, eine technische Ausnutzung dieser Schubbetriebsphase, die eine Erzeugung, Förderung, Weiterleitung, Aufbereitung oder Speicherung von Druckluft (DL) für mindestens eine Fahrzeugkomponente (FK) bewirkt, veranlaßt.

31. Steuereinrichtung nach einem der Ansprüche 1 bis 30, **dadurch gekennzeichnet, daß** die Verarbeitungseinheit (2) für momentane oder zukünftige Schubbetriebsphasen (SPn), deren zeitliche Dauer (T) jeweils voraussichtlich kleiner ist als die vorgegebene zeitliche Mindestdauer (Tmin) und die der errechneten frühesten zukünftigen Schubbetriebsphase (SPi) größerer Dauer (Ti) als der vorgegebenen Mindestdauer (Tmin) vorangehen, eine technische Ausnutzung dieser vorangehenden kürzeren Schubbetriebsphasen unterbindet.

32. Steuereinrichtung nach einem der Ansprüche 1 bis 31, **dadurch gekennzeichnet, daß** die Steuereinrichtung (2) in Abhängigkeit von den Höhenpositionsdaten (HD) der Fahrtstrecke (F) und von den Ortskoordinaten (OK) des Fahrzeugs (20) die Druckluftversorgung eines Bremssystems (B), einer Komponente eines Bremssystems (B), eines Druckluftverteilers (DLT), einer Förderleitung (DF) für Druckluft und/oder einer pneumatischen Steuerleitung steuert.

33. Steuereinrichtung nach einem der Ansprüche 1 bis 32, **dadurch gekennzeichnet, daß** die Steuereinrichtung (2) zur Steuerung weiterhin aktuelle Fahrzeugparameter (p) verarbeitet, wobei die aktuellen Fahrzeugparameter (p) zumindest ein Element aus Ortskoordinaten (OK) oder Höhenpositionsdaten (HD) des Fahrzeugs, der Fahrzeuggeschwindigkeit, Radgeschwindigkeiten und/oder Gierraten, einer Fahrzeugbeschleunigung, einem Druckluftniveaus einer Bremsanlage (B), einem Feuchtigkeitsniveau einer Druckluftbehälters (DB) oder einer Druckluftaufbereitungspatrone (DP), einer Motordrehzahl, dem Betrag und/oder dem Vorzeichen eines Motordrehmoments, Kupplungs- und/oder Gangdaten, Retarderdaten des Fahrzeugs (20) und/oder einem Abstand zu einem vorausfahrenden anderen Fahrzeug umfassen.

34. Steuereinrichtung nach einem der Ansprüche 1 bis 33, **dadurch gekennzeichnet, daß** die durch die Verarbeitungseinheit (2) verarbeiteten Ortskoordinaten (OK) jeweils die momentane Position (x, y) des fahrenden Fahrzeugs (20) entlang der Fahrtstrecke (F) angeben.

35. Steuereinrichtung nach einem der Ansprüche 1 bis 34, **dadurch gekennzeichnet, daß** die Steuereinrichtung (1) weiterhin eine Navigationseinrichtung (NAV) umfaßt, die Ortskoordinaten (OK), die jeweils eine momentane Position (x; y) des Fahrzeugs (20) entlang der Fahrtstrecke (F) angeben, empfängt und an die Verarbeitungseinheit (2) weiterleitet.

36. Steuereinrichtung nach einem der Ansprüche 1 bis 35, **dadurch gekennzeichnet, daß** die Steuereinrichtung (1), deren Navigationseinrichtung (NAV) oder deren Verarbeitungseinheit (2) eine Speichereinheit (MEM) aufweist, in der die Höhenpositionsdaten (HD) der Fahrtstrecke (F) gespeichert sind.

37. Steuereinrichtung nach einem der Ansprüche 1 bis 36, **dadurch gekennzeichnet, daß** die Navigationseinrichtung (NAV) außer den Ortskoordinaten (OK) des Fahrzeugs (20) auch die Höhenpositionsdaten (HD) der Fahrtstrecke (F) empfängt und an die Verarbeitungseinheit (2) weiterleitet.

38. Steuereinrichtung nach einem der Ansprüche 1 bis 37, **dadurch gekennzeichnet, daß** die Höhenpositionsdaten (HD) vertikale Positionskoordinaten (Z) einer Vielzahl von Streckenpunkten oder Streckenabschnitten der befahrenen oder zu befahrenden Fahrtstrecke (F) sind.

39. Steuereinrichtung nach einem der Ansprüche 1 bis 38, **dadurch gekennzeichnet, daß** die Navigationseinrichtung (NAV) der Steuereinrichtung (2) außer den Ortskoordinaten (OK; x, y, L) des Fahrzeugs auch Höhenpositionsdaten (HD), die eine momentane Höhenposition (z) des Fahrzeugs oder von momentan von dem Fahrzeug (20) befahrenen Streckenpunkten oder Streckenabschnitten der Fahrtstrecke (F) angeben, empfängt.

40. Steuereinrichtung nach einem der Ansprüche 1 bis 39, **dadurch gekennzeichnet, daß** die Navigationseinrichtung (NAV) der Steuereinrichtung (1) eine GPS-Empfängereinrichtung umfaßt.

41. Steuereinrichtung nach einem der Ansprüche 1 bis 40, **dadurch gekennzeichnet, daß** die Steuereinrichtung (1) die Steuerung mithilfe pneumatischer Steuersignale (S) ausübt.

42. Steuereinrichtung nach einem der Ansprüche 1 bis 41, **dadurch gekennzeichnet, daß** Steuereinrichtung (1) den Luftdruck einer pneumatischen Steuerleitung, die von einen Druckluftverteiler (DLT) zu einem Kompressor (KMP) führt, steuert.

43. Steuereinrichtung nach einem der Ansprüche 1 bis 42, **dadurch gekennzeichnet, daß** die Steuereinrichtung (2) die Steuerung mithilfe elektrischer oder optischer Steuersignale (S) ausübt.

44. Komponente (FK) eines Fahrzeugs (20) oder für ein Fahrzeug (20),
**dadurch gekennzeichnet, daß** die Komponente (K) eine Steuereinrichtung () nach einem der Ansprüche 1 bis 43 aufweist.

45. Komponente (K) nach Anspruch 44,
**dadurch gekennzeichnet, daß**
die Komponente (K) eine Komponente eines Druckluftsystems (D) oder eine zum Betrieb eines Druckluftsystems vorgesehene Komponente ist.

46. Komponente (K) nach Anspruch 44 oder 45
**dadurch gekennzeichnet, daß**
die Komponente (K) eine Kupplung (KPL), ein Kompressor (KMP), ein Druckluftventil (DV), ein Druckluftverteiler (DLT), eine Druckluftaufbereitungseinheit (DLA) oder eine Luftreinigungspatrone (DLP) ist.

47. Druckluftsystem für ein Fahrzeug,
**dadurch gekennzeichnet, daß**
das Druckluftsystem (D) eine Komponente (K) nach einem der Ansprüche 44 bis 46 mit einer Steuereinrichtung (2) einem der Ansprüche 1 bis 43 aufweist.

48. Druckluftsystem nach Anspruch 47,
**dadurch gekennzeichnet, daß** das Druckluftsystem (D) ein Druckluftsystem eines Nutzfahrzeugs ist.

49. Bremssystem für ein Fahrzeug,
**dadurch gekennzeichnet, daß**
das Bremssystem (B) eine Steuereinrichtung (2) nach einem der Ansprüche 1 bis 43 aufweist.

50. Bremssystem eines Fahrzeugs nach Anspruch 49,
**dadurch gekennzeichnet, daß**
das Bremssystem (B) eine Komponente (K) nach einem der Ansprüche 44 bis 46 enthält, die eine Steuereinrichtung (2) nach einem der Ansprüche 1 bis 43 aufweist.

## Claims

1. Control device (1) for a compressed air system (D) of a vehicle (20) or for a component (K) of a compressed air system (D) of a vehicle (20), wherein the control device (1) has at least one processing unit (2),
- which calculates a prediction (P) about the occurrence and/or the duration of overrun condition phases (SP; SPn) of the vehicle (20), taking into account altitude position data (HD) of a section of road (F) which the vehicle is travelling along or is to travel along, and
- which controls the compressed air system (D), a component (K) of the compressed air system (D) or a component provided for operating the compressed air system (D), taking into account the calculated prediction (P)
**characterised in that** the processing unit (2) is configured to check for control purposes whether the calculated prediction about the duration of an overrun condition phase (SP; SPn) is longer than a preset minimum duration (Tmin).

2. Control device according to claim 1, **characterised in that** the processing unit (2) calculates a prediction (P) which indicates whether and where overrun condition phases (SP; SPn) are expected to occur along a part (SA) of the section of road (F) respectively lying ahead.

3. Control device according to claim 1 or 2, **characterised in that** the processing unit (2) calculates a prediction (P) which indicates whether and when overrun condition phases (SP; SPn) will occur in a respectively imminent time period.

4. Control device according to any of claims 1 to 3, **characterised in that** the control device (2) calculates a prediction (P) about the expected time of the start (ta) and/or the end (tb) of overrun condition phases (SP; SPn), about the time interval (TV) until the occurrence of overrun condition phases (SP; SPn) or about the chronological duration (Tn) of overrun condition phases (SPn).

5. Control device according to any of claims 1 to 4, **characterised in that** the processing unit (2) defines, by means of the calculated prediction (P), the times (ti) of execution of switching processes by means of which the component (K) can be optionally adjusted at least from a first state (Z1) into a second state (Z2) or vice versa taking into account predicted overrun condition phases (SP; SPn).

6. Control device according to any of claims 1 to 5, **characterised in that** the processing unit (2) actuates the component (K) as a function of the altitude position data (HD) of the section of road (F) and of location coordinates (OK) of the vehicle (20) in such a way that the component (K) is in a first state (Z1) during the overrun condition phases (SP; SPn) or during selected overrun condition phases (SPi) and is in a second state (Z2) or in further states (Zn) at least outside the overrun condition phases.

7. Control device according to claim 6, **characterised in that** the processing unit (2) actuates the component (K) in such a way that the component (K) is in the first state (Z1) during such overrun condition phases (SPi) whose expected duration (Ti) is longer than a predefined minimum duration (Tmin) and is otherwise in the second state (Z2) or in further states (Zn).

8. Control device according to any of claims 1 to 7, **characterised in that**, in at least one operating state of the compressed air system (D), the processing unit (2) controls the compressed air system (D), a component (K) of the compressed air system (D) or a component provided for operating the compressed air system (D), taking into account the calculated prediction (P).

9. Control device according to any of claims 1 to 8, **characterised in that** the processing unit (2) actuates a vehicle component (FK) which is directly or indirectly connected between a vehicle engine (FM) and at least one compressed air consumer (DLV) of the compressed air system (D), for example a brake system.

10. Control device according to any of claims 1 to 9, **characterised in that** the processing unit (2) actuates a vehicle component (FK) which is connected upstream of compressed-air-conducting components (K) of the compressed air system (D) and influences an effect of a vehicle engine (FM) on the compressed air system (D).

11. Control device according to any of claims 1 to 10, **characterised in that** the processing unit (2) actuates a clutch (KPL) which is connected between the vehicle engine (FM) and a compressor (KMP) of the compressed air system (D).

12. Control device according to any of claims 1 to 11, **characterised in that** in the first state (Z1) the clutch (KPL) couples the compressor (KMP) to the vehicle engine (FM), and in the second state (Z2) it prevents the engagement of the clutch, or vice versa.

13. Control device according to any of claims 1 to 12, **characterised in that** the processing unit (2) actuates at least one compressor (KMP) which in the first state (Z1) delivers compressed air and/or passes it on to a compressed air distributor (DLT), a compressed air-conditioning unit (DLA), a compressed air consumer (DLV) or to another component (K), and which in the second state (Z2) causes compressed air (D) to be delivered and/or passed on in a different way than in the first state.

14. Control device according to claim 13, **characterised in that** in the first state (Z1) the compressor (KMP) supplies an air-conditioning unit (LA) with compressed air, and in the second state (Z2) said compressor (KMP) is switched into an idling state in which the air-conditioning unit (LA) is not supplied with compressed air or only with compressed air at a lower pressure than in the first state (Z1).

15. Control device according to any of claims 1 to 14, **characterised in that** the processing unit (2) controls a compressed air valve (DV) which in the first state (Z1) passes on compressed air (DL), and in the second state (Z2) blocks or reverses the passing on of compressed air (DL).

16. Control device according to any of claims 1 to 15, **characterised in that** the processing unit (2) actuates a compressed air distributor (DLV) which in the first state (Z1) takes up compressed air and passes it on, and which in the second state (Z2) prevents the taking up of compressed air (DL).

17. Control device according to any of claims 1 to 16, **characterised in that** the processing unit (2) actuates a compressed air-conditioning unit (DLA) which has a compressed air cartridge (DLP), wherein in the first state (Z1) the compressed air-conditioning unit (DLA) permits, as a result of the control taking place by means of the calculated prediction (P), the cleaning and passing on of new compressed air (DL) through the compressed air cartridge (DP) through to at least one compressed air consumer (DLV), for example to a brake system (B), and in the second state (Z2) said compressed air-conditioning unit (DLA) regenerates the compressed air cartridge (DP), in particular dehumidifies and cleans it.

18. Control device according to any of claims 1 to 17, **characterised in that** the control device (2) controls; the compressed air system (D) or the component (K) by means of the calculated prediction (P) in such a way that times at which regeneration of the compressed air cartridge (DLP), in particular dehumidifying and cleaning, are carried out, are influenced, in particular brought chronologically forward or delayed, taking into account predicted overrun condition phases (SP; SPn).

19. Control device according to any of claims 1 to 18, **characterised in that** the processing unit (2) also calculates the prediction (P) taking into account location coordinates (OK) which indicate an instantaneous position (x; y) of the vehicle (20) along the section of road (20).

20. Control device according to any of claims 1 to 19, **characterised in that** the control device (2) controls the compressed air system (D) or the component (K) by means of the calculated prediction (P) in such a way that delivery of compressed air and/or taking up of compressed air takes place exclusively or preferably during predicted overrun condition phases (SP; SPn).

21. Control device according to any of claims 1 to 20, **characterised in that** the control device (2) controls the compressed air system (D) or a component (K) by means of the calculated prediction (P) in such a way that delivery of compressed air and/or taking up of compressed air takes place exclusively or preferably during overrun condition phases (SP; SPn) whose duration (T) exceeds a predefined, defined or parameter-dependent minimum duration (Tmin).

22. Control device according to any of claims 1 to 21, **characterised in that** the processing unit (2) calculates in advance, from the altitude position data (HD) of the section of road (F) and from a direction of travel (R) of the vehicle (20) along the section of road (F), where a section of road (GS) with a negative gradient will respectively occur in the direction of travel (R) on the section of road (F) or on a part (SA) of the section of road lying directly ahead.

23. Control device according to any of claims 1 to 22, **characterised in that** the processing unit (2) calculates a time interval (TV) to imminent overrun condition phases (SP), the chronological duration (Td; Tn) of the overrun condition phases (SP) themselves and/or the times (ta; tb) of their start and/or their end by means of the sections of road (GS) with a negative gradient which are calculated in advance.

24. Control device according to any of claims 1 to 23, **characterised in that** the processing unit (2) calculates a prediction (P) for the expected time period (T0; Tn) of overrun condition phases (SP0; SPn) which have already begun and/or are imminent, and compares them with a predefined minimum duration (Tmin), and exclusively or predominantly causes overrun condition phases (SPi) such as these whose calculated time period (Ti) is longer than the predefined minimum duration (Tmin) to deliver compressed air (DL) by means of a compressor (KMP) in the direction of a compressed air distributor (DLT) or at least of a compressed air consumer (DLV) such as, for example, of a brake system (B), to take up air by means of a compressed air distributor (DLT), to switch at least one compressed air valve (DV) from a first state (Z1) into a second state (Z2) and/or to switch a clutch (KPL).

25. Control device according to any of claims 1 to 24, **characterised in that** the processing unit (2) calculates, for the purpose of control, the distance along the section of road and/or the travel time after which the first overrun condition phase (SPi) whose duration is expected to exceed the predefined minimum period (Tmin) will occur.

26. Control device according to any of claims 1 to 25, **characterised in that** the processing unit (2) compares the length (L) of sections of road (GS) with a negative gradient lying ahead with a predefined minimum length (Lmin) and outputs prediction data (PD) which permits targeted utilisation of overrun condition phases (SP) on only those sections of road (GS) with a negative gradient whose length (L) exceeds the predefined minimum length (Lmin).

27. Control device according to claim 26, **characterised in that** the processing unit (2) uses, for the comparison, limiting values (G) which depend on one or more instantaneous vehicle parameters (p).

28. Control device according to any of claims 1 to 27, **characterised in that**, for an instantaneous overrun condition phase (SP0) which has already started, the processing unit (2) calculates a prediction (P) about the expected remaining chronological duration (T0) of this overrun condition phase (SP0).

29. Control device according to any of claims 1 to 28, **characterised in that** the processing unit (2) generates in each case a control signal (S) for an expected imminent or already started overrun condition phase (SP0; SPn), which control signal (S) defines, as a function of the expected remaining chronological duration (T) of this overrun condition phase (SP), whether or not technical utilisation of this overrun condition phase (SP) is to be brought about, which utilisation causes compressed air (DL) for at least one vehicle component (FK) to be generated, delivered, passed on, conditioned or stored.

30. Control device according to claim 29, **characterised in that** the processing unit (2) generates in each case a control signal (S) for an overrun condition phase (SP0) which has already started, which control signal (S) then brings about technical utilisation of this overrun condition phase when the expected, still remaining chronological duration (T) of the instantaneous overrun condition phase (SP0) exceeds a predefined limiting value (Tmin), which utilisation causes compressed air (DL) for at least one vehicle component (FK) to be generated, delivered, passed on, conditioned or stored.

31. Control device according to any of claims 1 to 30, **characterised in that**, for instantaneous or future overrun condition phases (SPn) whose chronological duration (T) is in each case expected to be shorter than the predefined chronological minimum duration (Tmin) and which precede the calculated earliest future overrun condition phase (SPi) with a longer duration (Ti) than the predefined minimum duration (Tmin), the processing unit (2) prevents technical utilisation of these preceding shorter overrun condition phases.

32. Control device according to any of claims 1 to 31, **characterised in that** the control device (2) controls the compressed air supply of a brake system (B), of a component of a brake system (B), of a compressed air distributor (DLT), of a delivery line (DF) for compressed air and/or of a pneumatic control line as a function of the altitude position data (HD) of the section of road (F) and of the location coordinates (OK) of the vehicle (20).

33. Control device according to claim 32, **characterised in that** the processing unit (2) continues, for the purpose of control, to process current vehicle parameters (p), wherein the current vehicle parameters (p) comprise at least one element composed of location coordinates (OK) or altitude position data (HD) of the vehicle, of the vehicle speed, wheel speeds and/or yaw rates, of a vehicle acceleration, of a compressed air level of a brake system (B); of a humidity level of a compressed air vessel (DB) or of a compressed air-conditioning cartridge (DP), of an engine speed, of the absolute value and/or of the sign of an engine torque, clutch data and/or gear speed data, retarder data of the vehicle (20) and/or of a distance from another vehicle travelling ahead.

34. Control device according to any of claims 1 to 33, **characterised in that** the location coordinates (OK) which are processed by the processing unit (2) each indicate the instantaneous position (x, y) of the travelling vehicle (20) along the section of road (F).

35. Control device according to any of claims 1 to 34, **characterised in that** the control device (1) also comprises a navigation device (NAV) which receives location coordinates (OK) which each indicate an instantaneous position (x; y) of the vehicle (20) along the section of road (F), and passes said location coordinates (OK) onto the processing unit (2).

36. Control device according to any of claims 1 to 35, **characterised in that** the control device (1), the navigation device (NAV) thereof or the processing unit (2) thereof has a memory unit (MEM) in which the altitude position data (HD) of the section of road (F) are stored.

37. Control device according to any of claims 1 to 36, **characterised in that** the navigation device (NAV) receives not only the location coordinates (OK) of the vehicle (20) but also the altitude position data (HD) of the section of road (F) and passes them onto the processing unit (2).

38. Control device according to any of claims 1 to 37, **characterised in that** the altitude position data (HD) are vertical position coordinates (Z) of a plurality of points or sections on the section of road (F) which is being travelled along or is to be travelled along.

39. Control device according to any of claims 1 to 38, **characterised in that** the navigation device (NAV) of the control device (2) receives not only the coordination data (OK; x, y, L) of the vehicle but also altitude position data (HD) which indicate an instantaneous altitude position (z) of the vehicle, or from points or sections on the section of road (F) which are being instantaneously travelled along by the vehicle (20).

40. Control device according to any of claims 1 to 39, **characterised in that** the navigation device (NAV) of the control device (1) comprises a GPS receiver device.

41. Control device according to any of claims 1 to 40, **characterised in that** the control device (1) carries out the control by means of pneumatic control signals (S).

42. Control device according to any of claims 1 to 41, **characterised in that** the control device (1) controls the air pressure of a pneumatic control line which leads from a compressed air distributor (DLT) to a compressor (KMP).

43. Control device according to any of claims 1 to 42, **characterised in that** the control device (1) carries out the control by means of electrical or optical control signals (S).

44. Component (FK) of a vehicle (20) or for a vehicle (20),
**characterised in that** the component (K) has a control device () according to any of claims 1 to 43.

45. Component (K) according to claim 44,
**characterised in that**
the component (K) is a component of a compressed air system (D) or a component which is provided for operating a compressed air system.

46. Component (K) according to claim 44 or 45,
**characterised in that**
the component (K) is a clutch (KPL), a compressor (KMP), a compressed air valve (DV), a compressed air distributor (DLT), a compressed air-conditioning unit (DLA) or an air purification cartridge (DLP).

47. Compressed air system for a vehicle,
**characterised in that**
the compressed air system (D) has a component (K) according to any of claims 44 to 46 with a control device (2) according to any of claims 1 to 43.

48. Compressed air system according to claim 47,
**characterised in that**
the compressed air system (D) is a compressed air system of a commercial vehicle.

49. Brake system for a vehicle,
**characterised in that**
the brake system (B) has a control device (2) according to any of claims 1 to 43.

50. Brake system for a vehicle according to claim 49,
**characterised in that**
the brake system (B) contains a component (K) according to any of claims 44 to 46, which component (K) has a control device (2) according to any of claims 1 to 43.

## Revendications

1. Dispositif (1) de commande d'un système (D) à air comprimé d'un véhicule (20) ou d'un composant (K) d'un système (D) à air comprimé d'un véhicule (20), le dispositif (1) de commande ayant au moins une unité (2) de traitement,
- qui, en tenant compte de données (HD) de position en altitude d'une voie (F) de circulation parcourue ou à parcourir par le véhicule, calcule un pronostic (P) sur l'apparition et la durée (Td) de phases (SP; SPn) de roulement sur la lancée du véhicule (20) et
- qui, en tenant compte du pronostic (P) calculée, commande le système (D) à air comprimé, un composant (K) du système (D) à air comprimé ou un composant prévu pour faire fonctionner le système (D) à air comprimé,
**caractérisé en ce que** l'unité (2) de traitement est conçue pour contrôler pour la commande si le pronostic calculé sur la durée (Td) d'une phase (SP; SPn) de roulement sur la lancée est plus grand qu'une durée (Tmin) donnée à l'avance.

2. Dispositif de commande suivant la revendication 1, **caractérisé en ce que** l'unité (2) de traitement calcule un pronostic qui indique si et où, le long d'un tronçon (SA) de la voie (F) de circulation se trouvant en avant, des phases (SP; SPn) de roulement sur la lancée se produiront probablement.

3. Dispositif de commande suivant la revendication 1 ou 2, **caractérisé en ce que** l'unité (2) de traitement calcule un pronostic qui indique où et quand des phases (SP; SPn) de roulement sur la lancée se produiront dans un laps de temps imminent.

4. Dispositif de commande suivant l'une des revendications 1 à 3, **caractérisé en ce que** le dispositif (2) de commande calcule un pronostic (P) pour l'instant probable du début (ta) et/ou de la fin (tb) de phases (SP; SPn) de roulement sur la lancée, pour la distance (TV) dans le temps jusqu'à l'apparition de phases (SP; SPn) de roulement sur la lancée ou pour la durée (Tn) dans le temps de phases (SPn) de roulement sur la lancée.

5. Dispositif de commande suivant l'une des revendications 1 à 4, **caractérisé en: ce que** l'unité (2) de traitement fixe, en tenant compte des phases (SP; SPn) de roulement sur la lancée pronostiquées et à l'aide du pronostic (P) calculé, les instants (ti) où s'effectuent des opérations de commutation par lesquelles le composant (K) peut, au choix, passer au moins d'un premier (Z1) à un deuxième état (Z2) ou inversement.

6. Dispositif de commande suivant l'une des revendications 1 à 5, **caractérisé en, ce que** l'unité (2) de traitement commande le composant (K) en fonction des données (HD) de position en altitude de la voie (F) de circulation et de coordonnées (OK) dans l'espace du véhicule (20), de manière à ce que le composant (K) se trouve dans un premier état (Z1) pendant les phases (SP; SPn) de roulement sur la lancée ou pendant des phases (SPi) sélectionnées de roulement sur la lancée et se trouve dans un deuxième état (Z2) ou dans d'autres états (Zn), au moins en dehors des phases de roulement sur la lancée.

7. Dispositif de commande suivant la revendication 6, **caractérisé en ce que** l'unité (2) de traitement commande le composant (K) de manière à ce que le composant (K) se trouve pendant les phases (Spi) de roulement sur la lancée, dont la durée (Ti) probable est plus grande qu'une durée (Tmin) donnée à l'avance, dans un premier état (Z1) et sinon se trouve dans un deuxième état (Z2) ou dans d'autres états (Zn).

8. Dispositif de commande suivant l'une des revendications 1 à 7, **caractérisé en ce que** l'unité (2) de traitement commande, en tenant compte du pronostic (P) calculé dans au moins un état de fonctionnement du système (D) à air comprimé, le système (D) à air comprimé, un composant (K) du système (D) à air comprimé ou un composant prévu pour le fonctionnement du système (D) à air comprimé.

9. Dispositif de commande suivant l'une des revendications 1 à 8, **caractérisé en ce que** l'unité (2) de traitement commande un composant (FK) du véhicule, qui est monté intermédiairement directement ou indirectement entre un moteur (FM) du véhicule et au moins un consommateur (DLV) d'air comprimé du système (D) à air comprimé, par exemple un système de frein.

10. Dispositif de commande suivant l'une des revendications 1 à 9, **caractérisé en ce que** l'unité (2) de traitement commande un composant (FK) du véhicule, qui est monté en amont de composant (K) conduisant l'air comprimé du système (D) à air comprimé et influe un effet d'un moteur (FM) du véhicule sur le système (D) à air comprimé.

11. Dispositif de commande suivant l'une des revendications 1 à 10, **caractérisé en ce que** l'unité (2) de traitement de commande commande un accouplement (KPL) qui est monté intermédiairement entre le moteur (FM) du véhicule et un compresseur (KMP) du système (D) à air comprimé.

12. Dispositif de commande suivant l'une des revendications 1 à 11, **caractérisé en ce que** l'accouplement (KPL) accouple, dans le premier état (Z1), le compresseur (KMP) au moteur (FM) du véhicule et, dans le deuxième état (Z2), supprime l'accouplement ou inversement.

13. Dispositif de commande suivant l'une des revendications 1 à 12, **caractérisé en ce que** l'unité (2) de traitement commande au moins un compresseur (KMP) qui, dans le premier état (Z1), véhicule et/ou achemine de l'air comprimé à un répartiteur (DLT) d'air comprimé, à une unité (DLA) de traitement d'air comprimé, à un consommateur (DLV) d'air comprimé ou à un autre composant (K) et qui, dans le deuxième état (Z2), provoque un véhiculage et/ou un acheminement d'air (D) comprimé autre que dans le premier état.

14. Dispositif de commande suivant l'une des revendications 1 à 13, **caractérisé en ce que** le compresseur (KMP), dans le premier état (Z1), alimente en air comprimé une unité (LA) de traitement de l'air et, dans le deuxième état (Z2), est mis dans un état de marche à vide, dans lequel l'unité (LA) de traitement de l'air n'est pas alimentée en air comprimé ou n'est alimentée qu'en de l'air comprimé d'une pression plus basse que dans le premier état (Z1).

15. Dispositif de commande suivant l'une des revendications 1 à 14, **caractérisé en ce que** l'unité (2) de traitement commande une vanne (DV) d'air comprimé qui, dans le premier état (Z1), achemine de l'air (DL) comprimé et, dans le deuxième état (Z2), empêche un acheminement d'air (DL) comprimé ou inversement.

16. Dispositif de commande suivant l'une des revendications 1 à 15, **caractérisé en ce que** l'unité (2) de traitement commande un répartiteur (DLV) d'air comprimé qui, dans le premier état (Z1), reçoit de l'air comprimé et l'achemine et qui, dans le deuxième état (Z2), supprime la réception d'air (DL) comprimé.

17. Dispositif de commande suivant l'une des revendications 1 à 16, **caractérisé en ce que** l'unité (2) de traitement commande une unité (DLA) de traitement d'air comprimé, qui a une cartouche (DLP) d'air comprimé, l'unité (DLA) de traitement d'air comprimé rendant possible, en raison de la commande s'effectuant à l'aide du pronostic (P) calculé dans le premier état (Z1), le nettoyage et l'acheminement d'air (DL) comprimé nouveau à travers la cartouche (DP) d'air comprimé jusqu'à au moins un consommateur (DLV) d'air comprimé, par exemple jusqu'à un système (B) de frein et, dans le deuxième état (Z2), régénérant la cartouche (DP) d'air comprimé, notamment la déshumidifiant et la nettoyant.

18. Dispositif de commande suivant l'une des revendications 1 à 17, **caractérisé en ce que** le dispositif (2) de commande commande à l'aide du pronostic (P) calculé le système (D) à air comprimé ou le composant (K) de manière à influencer, notamment en avançant ou en décalant dans le temps des instants ou une régénération de la cartouche (DLP) d'air comprimé, notamment une déshumidification et un nettoyage a lieu en tenant compte des phases (SP; SPn) de roulement sur la lancée pronostiquées.

19. Dispositif de commande suivant l'une des revendications 1 à 18, **caractérisé en ce que** l'unité (2) de traitement calcule le pronostic (P) en tenant compte en outre de coordonnées (OK) dans l'espace, qui indiquent une position (x; y) instantanée du véhicule (20) le long de la voie (20) de circulation.

20. Dispositif de commande suivant l'une des revendications 1 à 19, **caractérisé en ce que** le dispositif (2) de commande commande à l'aide du pronostic (P) calculé le système (D) à air comprimé ou le composant (K), de manière à véhiculer et/ou recevoir de l'air comprimé exclusivement ou de préférence pendant des phases (SP; SPn) de roulement sur la lancée pronostiquées.

21. Dispositif de commande suivant l'une des revendications 1 à 20, **caractérisé en ce que** le dispositif de commande commande à l'aide du pronostic (P) calculé le système (D) à air comprimé ou un composant (K) de manière à véhiculer et/ou à recevoir de l'air comprimé exclusivement ou de préférence pendant les phases (SP; SPn) de roulement sur la lancée, dont la durée (T) dépasse une durée (Tmin) minimum donnée à l'avance, fixée ou dépendant d'un paramètre.

22. Dispositif de commande suivant l'une des revendications 1 à 21, **caractérisé en ce que** l'unité (2) de traitement calcule à l'avance, à partir des données (HD) de position en altitude de la voie (F) de circulation et d'un sens (R) de marche du véhicule (20) le long (F) de la voie de circulation, où aura lieu, sur la voie (F) de circulation ou sur un tronçon (SA) de la voie de circulation se trouvant juste devant, respectivement une descente (GS) dans le sens (R) de marche.

23. Dispositif de commande suivant l'une des revendications 1 à 22, **caractérisé en ce que** l'unité (2) de traitement calcule, à l'aide des descentes (GS) calculées à l'avance une distance (TV) dans le temps jusqu'aux phases (SP) de roulement sur la lancée imminentes, la durée (Td; Tn) dans le temps des phases (SP) de roulement sur la lancée elles-mêmes et/ou les instants (ta; tb) de leur début et/ou de leur fin.

24. Dispositif de commande suivant l'une des revendications 1 à 23, **caractérisé en ce que** l'unité (2) de traitement calcule un pronostic (P) pour la durée (T0; Tn) probable de phases (SP0; SPn) de roulement sur la lancée déjà commencées et/ou imminentes et le compare à une durée (Tmin) minimum donnée à l'avance et fait que soit utilisée exclusivement ou principalement les phases (SPi) de roulement sur la lancée, dont la durée (Ti) calculée est plus grande que la durée (Tmin) donnée à l'avance, pour véhiculer de l'air (DL) comprimé dans un compresseur (KMP) en direction d'un répartiteur (DLT) d'air comprimé ou d'au moins un consommateur (DLV) d'air, comprimé, comme par exemple un système (B) de frein, pour recevoir de l'air par un répartiteur (DLT) d'air comprimé, pour faire passer au moins une vanne (DV) d'air comprimé d'un premier état (Z1) dans un deuxième état (Z2) et/ou pour enclencher un accouplement (KPL).

25. Dispositif de commande suivant l'une des revendications 1 à 24, **caractérisé en ce que** l'unité (2) de traitement calcule pour la commande la distance à laquelle le long de la voie de circulation ou le temps de circulation après lequel la première phase (SPi) de roulement sur la lancée, dont la durée dépassera probablement la durée (Tmin) minimum donnée à l'avance, aura lieu.

26. Dispositif de commande suivant l'une des revendications 1 à 25, **caractérisé en ce que** l'unité (2) de traitement compare la longueur (L) de descente (GS) se trouvant devant à une longueur (Lmin) minimum donnée à l'avance et émet des données (PD) de pronostic, qui rendent possible une utilisation ciblée de phases (SP) de roulement sur la lancée, seulement sur les descentes (GL), dont la longueur (L) dépasse la longueur (Lmin) minimum donnée à l'avance.

27. Dispositif de commande suivant la revendication 26, **caractérisé en ce que** l'unité (2) de traitement utilise pour la comparaison des valeurs (G) limites qui dépendent d'un ou de plusieurs paramètres (p) instantanés du véhicule.

28. Dispositif de commande suivant l'une des revendications 1 à 27, **caractérisé en ce que** l'unité (2) de traitement calcule toujours pour une phase (SP0) de roulement sur la lancée instantanée, déjà commencée un pronostic (P) sur la durée (TO) restante probablement de cette phase (SP0) de roulement sur la lancée.

29. Dispositif de commande suivant l'une des revendications 1 à 28, **caractérisé en ce que** l'unité (2) de traitement produit pour une phase (SP0; SPn) de roulement sur la lancée, probablement imminente ou déjà commencée, un signal (S) de commande, qui fixe, en fonction de la durée (T) restante probablement de cette phase (SP) de roulement sur la lancée, si une utilisation technique de cette phase (SP) de roulement sur la lancée, qui a pour effet une production, un transport, un acheminement, un traitement ou une accumulation d'air (DL) comprimé pour au moins un composant (FK) du véhicule, sera provoquée ou ne le sera pas.

30. Dispositif de commande suivant la revendication 29, **caractérisé en ce que** l'unité (2) de traitement produit, pour une.phase (SP0) de roulement sur la lancée déjà commencée, un signal (S) de commande qui, si la durée (T) restant encore probablement de la phase (SP0) instantanée de roulement la lancée dépasse une valeur (Tmin) limite définie à l'avance, provoque une utilisation technique de cette phase de roulement sur la lancée, qui a pour effet une production, un transport, un acheminement, un traitement ou une accumulation d'air (DL) comprimé pour au moins un composant (FK) du véhicule.

31. Dispositif de commande suivant l'une des revendications 1 à 30, **caractérisé en ce que** l'unité (2) de traitement supprime, pour des phases (SPn) instantanées ou à venir de roulement sur la lancée, dont la durée (T) est probablement plus petite que la durée (Tmin) donnée à l'avance et qui précèdent la phase (Spi) de roulement sur la lancée calculée à venir au plus tôt, de durée (Ti) plus grande que la durée (Tmin) minimum donnée à l'avance, une utilisation technique de ces phases de roulement sur la lancée précédentes plus courtes.

32. Dispositif de commande suivant l'une des revendications 1 à 31, **caractérisé en ce que** le dispositif (2) de commande commande, en fonction des données (HD) de position en altitude de la voie (F) de circulation et des coordonnées (OK) dans l'espace du véhicule (20), l'alimentation en air comprimé d'un système (B) de frein, d'un composant d'un système (B) de frein, d'un répartiteur (DLT) d'air comprimé, d'un conduit (DF) de transport d'air comprimé et/ou d'une ligne de commande pneumatique.

33. Dispositif de commande suivant l'une des revendications 1 à 32, **caractérisé en ce que** le dispositif (2) de commande traite pour la commande, en outre, des paramètres (p) instantanés du véhicule, les paramètres (p) instantanés du véhicule comprenant au moins un élément choisi par les coordonnées (OK) dans l'espace ou les données (HD) de position en altitude du véhicule, la vitesse du véhicule, des vitesses de roue et/ou des taux d'embardée, une accélération du véhicule, un niveau d'air comprimé d'une installation (B) de frein, un niveau d'humidité d'un réservoir (DB) d'air comprimé ou d'une cartouche (DP) de traitement d'air comprimé, un régime du moteur, la valeur absolue et/ou le signe d'un couple de rotation du moteur, des données d'embrayage et/ou de rapport, des données de ralentisseur du véhicule (20) et/ou une distance à un autre véhicule précédent.

34. Dispositif de commande suivant l'une des revendications 1 à 33, **caractérisé en ce que** les coordonnées (OK) dans l'espace traitées par l'unité (2) de traitement indiquent respectivement la position (x, y) instantanée du véhicule (20) en déplacement le long de la voie (F) de circulation.

35. Dispositif de commande suivant l'une des revendications 1 à 34, **caractérisé en ce que** le dispositif (1) de commande comprend en outre un dispositif (NAV) de navigation, qui reçoit les coordonnées (OK) dans l'espace indiquant respectivement une position (x, y) instantanée du véhicule (20) le long de la voie (F) de circulation et les achemine à l'unité (2) de traitement.

36. Dispositif de commande suivant l'une des revendications 1 à 35, **caractérisé en ce que** le dispositif (NAV) de navigation ou l'unité (2) de traitement du dispositif (2) de commande a une unité (MEM) de mémorisation, dans laquelle sont mémorisées les données (HD) de position en altitude de la voie (F) de circulation.

37. Dispositif de commande suivant l'une des revendications 1 à 36, **caractérisé en ce que** le dispositif (NAV) de navigation reçoit, outre les coordonnées (OK) dans l'espace du véhicule (20), également les données (HD) de position en altitude de la voie (F) de circulation et les achemine à l'unité (2) de traitement.

38. Dispositif de commande suivant l'une des revendications 1 à 37, **caractérisé en ce que** les données (HD) de position en altitude sont des coordonnées (Z) de position verticale d'une pluralité de points ou de tronçons de la voie (F) de circulation parcourue ou à parcourir.

39. Dispositif de commande suivant l'une dès revendications 1 à 38, **caractérisé en ce que** le dispositif (NAV) de navigation du dispositif (2) de commande reçoit, outre les coordonnées (OK; x, y, L) dans l'espace du véhicule, également des données (HD) de position en altitude, qui indiquent une position (z) instantanée en altitude du véhicule ou des points ou des tronçons de la voie (F) de circulation parcourue instantanément par le véhicule (20).

40. Dispositif de commande suivant l'une des revendications 1 à 39, **caractérisé en ce que** le dispositif (NAV) de navigation du dispositif (1) de commande comprend un dispositif récepteur GPS.

41. Dispositif de commande suivant l'une des revendications 1 à 40, **caractérisé en ce que** le dispositif (1) de commande exécute la commande à l'aide de signaux (S) de commande pneumatiques.

42. Dispositif de commande suivant l'une des revendications 1 à 41, **caractérisé en ce que** le dispositif (1) de commande commande la pression de l'air d'une ligne de commande pneumatique, qui va d'un répartiteur (DLT) d'air comprimé à un compresseur (KMP).

43. Dispositif de commande suivant l'une des revendications 1 à 42, **caractérisé en ce que** le dispositif (2) de commande exécute la commande à l'aide de signaux (S) de commande électriques ou optiques.

44. Composant (FK) d'un véhicule (20) ou pour un véhicule (20),
**caractérisé en ce que** le composant (K) a un dispositif (1) de commande suivant l'une des revendications 1 à 43.

45. Composant (K) suivant la revendication 44,
**caractérisé en ce que**
le composant (K) est un composant d'un système (D) à air comprimé ou un composant prévu pour faire fonctionner un système à air comprimé.

46. Composant (K) suivant la revendication 44 ou 45,
**caractérisé en ce que** le composant (K) est un accouplement (KPL), un compresseur (KMP), une vanne (DV) d'air comprimé, un répartiteur (DLT) d'air comprimé, une unité (DLA) de traitement d'air comprimé ou une cartouche (DLP) d'épuration d'air.

47. Système à air comprimé pour un véhicule,
**caractérisé en ce que**
le système (D) à air comprimé a un composant (K) suivant l'une des revendications 44 à 46 ayant un dispositif (2) de commande suivant l'une des revendications 1 à 43.

48. Système à air comprimé suivant la revendication 47,
**caractérisé en ce que** le système (D) à air comprimé est un système à air comprimé d'un véhicule utilitaire.

49. Système de frein pour un véhicule,
**caractérisé en ce que**
le système (B) de frein a un dispositif (2) de commande suivant l'une des revendications 1 à 43.

50. Système de frein d'un véhicule suivant la revendication 49,
**caractérisé en ce que**
le système (B) de frein comporte un composant (K) suivant l'une des revendications 44 à 46, qui a un dispositif (2) de commande suivant l'une des revendications 1 à 43.
